(19) Europäisches Patentamt
European Patent Office
Office européen des brevets

(11) **EP 3 032 475 A1**

(12) **EUROPEAN PATENT APPLICATION**
published in accordance with Art. 153(4) EPC

(43) Date of publication:
**15.06.2016 Bulletin 2016/24**

(51) Int Cl.:
***G06Q 10/10*** (2012.01)

(21) Application number: **14835379.0**

(86) International application number:
**PCT/JP2014/068816**

(22) Date of filing: **15.07.2014**

(87) International publication number:
**WO 2015/019806 (12.02.2015 Gazette 2015/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2013 JP 2013166931**

(71) Applicant: **Zest Inc.**
**Tokyo 104-0041 (JP)**

(72) Inventor: **ITO Yukiko**
**Tokyo 104-0041 (JP)**

(74) Representative: **V.O.**
**P.O. Box 87930**
**2508 DH Den Haag (NL)**

(54) **TASK ALLOCATION DEVICE AND TASK ALLOCATION PROGRAM**

(57) Tasks are automatically allocated to a plurality of workers so as to shorten task time for each worker and, as a consequence, to shorten task time for all workers. Tasks are allocated on the basis of skills of workers and temporally registered in a worker allocation table. A worker candidate having a skill required for a task is extracted from a worker master and a task requiring the skill of the worker candidate is extracted and whether to allocate the task to the worker candidate is judged on the basis of departure point, travel time, working time, and time of arrival at the next place of stay.

FIG. 17

EP 3 032 475 A1

**Description**

**Technical Field**

The present invention relates to a task allocation device and more particularly to a technique which allocates a task requiring a specific skill to a worker with that skill and sets a traveling route for the worker so as to minimize task time for each worker.

**Background Art**

A given inspection task or maintenance task may require a skill to perform the task, for example, a national qualification or private qualification or a worker skill level. For example, inspection of a building includes various tests such as an earthquake-resistance test, a test to decide loan eligibility and a test to calculate a damage calculation rate for building defect liability and in order to conduct these tests, a skill required for each test is prescribed and a worker with that skill must be dispatched to a site where each building is located.

Therefore, a system has been proposed which automatically allocates tasks to workers with qualifications required for the tasks in consideration of the workers' traveling routes (see Patent Literature 1). According to Patent Literature 1, when the property location for a newly reserved task is within the traveling area for a previously allocated service person, the service person is extracted as the most suitable service person and the property to be serviced is automatically allocated to the person so that automatic task allocation is made in consideration of the traveling route of the service person.

**Citation List**

**Patent Literature**

PTL 1: Japanese Patent Application Laid-Open No. 2008-033433

**Summary of Invention**

**Technical Problem**

For the service person who travels and performs a task, task time includes the sum of travel time between property locations and working time. Shortening of the task time leads to reduction of the task load on the service person, higher task efficiency and reduction of overtime hours, resulting in task cost reduction. In addition, if task time savings for individual service persons are accumulated, it is expected that task time for the whole company is shortened and management efficiency is increased.

However, according to Patent Literature 1, it is possible to search for the most suitable service person to be allocated to a new task with reference to a previously set traveling route on the basis of the traveling route and travel distance but there is no idea that the traveling routes set for different service persons are reviewed to set the optimum traveling routes for all the service persons. Therefore, although there may be a case that by exchanging already allocated tasks between service persons, the traveling routes could be actually shortened, the traveling routes are not improved.

The present invention has been made in view of the above problem and has an object to provide a technique which shortens the task time for each of a plurality of workers and performs automatic task allocation so that as a consequence the task time for the entire working personnel is shortened.

**Solution to Problem**

In order to solve the above problem, the present invention provides a task allocation device which allocates a task requiring a specific skill to execute the task to a worker with the skill, characterized by including a control section which performs: referring to a worker allocation table storing a task provisionally allocated to the worker, extracting all tasks scheduled to be executed on a specific workday and cancelling provisional allocation of all the tasks; referring to a worker master storing a skill of each of the workers and extracting a worker subject to task allocation, among the workers to be on-duty on the specific workday in a predetermined order of priority; extracting all tasks that are scheduled to be executed on the specific workday and can be executed with the skill of the worker subject to task allocation and calculating total travel time for each of all the tasks by adding travel time from the last place of stay where the worker stays before conducting each task to the place of execution of the task and travel time from the place of execution of the task to the next place of stay to which the worker travels from the place of execution of the task; extracting a task for which the total travel time is shortest, as a task subject to allocation; calculating working time which it takes for the worker to conduct the task subject to allocation; calculating next stay place arrival time as time of arrival at the next place of stay, on the basis of the working time and the total travel time; and performing a process to allocate the task subject to allocation to the worker if the next stay place arrival time is before a predetermined time limit for the next place of stay indicating the latest time at which the worker should arrive at the next place of stay.

Consequently, tasks can be automatically allocated in the descending order of priority of workers so as to minimize total travel time. Assuming that task time for a worker includes working time and travel time, as a result of allocating tasks so as to minimize travel time, if working time is the same, more tasks can be allocated and if the number of jobs is the same, task time can be shortened. If task time for an organization to which workers belong is defined as the sum of task times for the workers, task time for each worker can be minimized and thus the task time for the organization as a whole can be minimized.

Furthermore, the task allocation device according to the present invention may include a report output section which creates a report based on a task allocated to the worker by the control section and outputs the report.

Consequently, tasks allocated to workers can be visualized.

Furthermore, the report output section may create a map report in which a route for traveling around places for tasks allocated to the worker is superimposed on map information.

Consequently, the positional relation of locations for tasks allocated to a worker can be visualized.

Furthermore, the report output section may create a time chart indicating task time details along an order of travelling for the tasks allocated to each worker on the specific workday.

Furthermore, the control section may receive a request for execution of the task and a desired date of execution of the task, calculate standard working time for the requested task, and judge, based on the standard working time, whether or not the requested task can be executed on each of workdays within a given period from the desired date of execution, for all workers with a skill required to execute the requested task, and create a worker availability calendar showing a result thereof.

Consequently, availability of workers with a skill required for a requested task can be indicated. In this case, by judging availability on the basis of free time available as working time without considering travel time, the computing speed is improved and availability can be indicated more quickly. As a result, for a customer who has made a request for a task, waiting time to check availability can be reduced.

Furthermore, the control section may receive a request for execution of the task and a desired date of execution of the task, extract a worker among all workers with a skill required to execute the requested task, in a predetermined order of priority, calculate working time required for the worker to execute the requested task, calculate the next stay place arrival time using the working time, provisionally allocate the requested task to the worker if the next stay place arrival time is before the time limit for the next place of stay, and accept the request for execution of the task, and cancel the provisional task allocation when allocating the task subject to allocation and perform a process to allocate the task subject to allocation.

Consequently, when a request for a task is received, the task can be provisionally allocated to a worker, taking working time and travel time into consideration. When making provisional allocation, judgement may be made as to whether there is free time equivalent to working time at a specified time for the requested task or if there is no specified time, as to whether there is free time equivalent to working time on a desired date of execution of the requested task, so the amount of computation is relatively small and a response can be more quickly made about whether to accept a task request.

In addition, the present invention provides a task allocation program which makes a computer allocate a task requiring a specific skill to execute the task to a worker with the skill, characterized by: referring to a worker allocation table storing a task provisionally allocated to the worker, extracting all tasks scheduled to be executed on a specific workday and cancelling provisional allocation of all the tasks; referring to a worker master storing a skill of each of the workers and extracting a worker subject to task allocation, among the workers to be on-duty on the specific workday in a predetermined order of priority; extracting all tasks that are scheduled to be executed on the specific workday and can be executed with the skill of the worker subject to task allocation and calculating total travel time for each of all the tasks by adding travel time from a last place of stay where the worker stays before conducting each task to the place of execution of the task and travel time from the place of execution of the task to the next place of stay to which the worker travels from the place of execution of the task; extracting a task for which the total travel time is shortest, as a task subject to allocation; calculating working time which it takes for the worker to conduct the task subject to allocation; calculating next stay place arrival time as time of arrival at the next place of stay, on the basis of the working time and the total travel time; and performing a process to allocate the task subject to allocation to the worker if the next stay place arrival time is before a predetermined time limit for the next place of stay indicating the latest time at which the worker should arrive at the next place of stay.

Consequently, tasks can be automatically allocated in the descending order of priority of workers so that total travel time is shortest. Assuming that task time for a worker includes working time and travel time, as a result of allocating a task so as to minimize travel time, if working time is the same, more tasks can be allocated and if the number of jobs is the same, task time can be shortened. If task time for an organization to which workers belong is defined as the sum of task times for the workers, task time for each worker can be minimized and thus the task time for the organization as a whole can be minimized.

Furthermore, the computer may be made to receive a request for execution of the task and a desired date of execution of the task, extract a worker among all workers with a skill required to execute the requested task, in a predetermined order of priority, calculate working time required for the worker to execute the requested task, calculate the next stay place arrival time using the working time, provisionally allocate the requested task to the worker if the next stay place arrival time is before the time limit for the next place of stay, and accept the request for execution of the task, and cancel the provisional task allocation when allocating the task subject to allocation and perform a process to allocate the task subject to allocation.

Consequently, when a request for a task is received, the task can be provisionally allocated to a worker, taking working time and travel time into consideration. When making provisional allocation, judgement may be made as to whether there is free time equivalent to working time at a specified time for the requested task or if there is no specified time, as to whether there is free time equivalent to working time on a desired date of execution of the requested task, so the amount of computation is relatively small and a response can be more quickly made about whether to accept a task request.

**Advantageous Effects of Invention**

According to the present invention, for a plurality of workers, task time for each worker is shortened and as a consequence, jobs can be automatically allocated so that task times for all workers can be shortened.

**Brief Description of Drawings**

[Fig. 1] Fig. 1 is a view showing an outline of a schedule table creation system according to this embodiment.
[Fig. 2] Fig. 2 is a block diagram showing the functional blocks of the schedule table creation device.
[Fig. 3] Fig. 3 is a view showing an example of route change before and after optimization, in which (a) shows a route before the optimization process and (b) shows a route after the optimization process.
[Fig. 4] Fig. 4 is a view showing an example of change of a time chart before and after the optimization in Fig. 3, in which (a) shows a time chart before the optimization process and (b) shows a time chart after the optimization process.
[Fig. 5] Fig. 5 is a view showing the structure of an inspector master.
[Fig. 6] Fig. 6 is a view showing an inspector calendar.
[Fig. 7] Fig. 7 is a view showing an example of a screen display showing an inspector allocation table.
[Fig. 8] Fig. 8 is a flowchart showing the operation sequence of the schedule table creation system.
[Fig. 9] Fig. 9 is a view showing a log-in screen.
[Fig. 10] Fig. 10 is a view showing an inspection reservation screen.
[Fig. 11] Fig. 11 is a view showing a worker availability calendar.
[Fig. 12] Fig. 12 is a view showing a schedule table screen.
[Fig. 13] Fig. 13 is a view showing a map report, in which (a) shows one before manual adjustment and (b) shows one after manual adjustment.
[Fig. 14] Fig. 14 is a view showing a map report, in which (a) shows one before manual adjustment and (b) shows one after manual adjustment.
[Fig. 15] Fig. 15 is a flowchart showing the first half of a worker availability calendar creation process.
[Fig. 16] Fig. 16 is a flowchart showing the second half of the worker availability calendar creation process.
[Fig. 17] Fig. 17 is a flowchart showing a provisional allocation process.
[Fig. 18] Fig. 18 is a view showing a travel time calculation process.
[Fig. 19] Fig. 19 is a flowchart showing the general processing sequence of the optimization process.
[Fig. 20] Fig. 20 is a flowchart showing details of the optimization process for an inspector ($X_1$).

**Description of Embodiments**

Next, an embodiment of the present invention will be described in detail referring to drawings. In this embodiment, an explanation will be given by taking an example that a task allocation device according to the present invention is applied to a schedule table creation system which receives a reservation for inspection of a building and creates a schedule table for an inspector (called an inspection schedule table). In the explanation below, a task will be called "inspection" and a worker who conducts the inspection will be called an "inspector". Furthermore, the skill required to conduct a certain inspection will be "qualification". Also, the content of a single reservation will be called a "job" and one job may include a plurality of inspections.

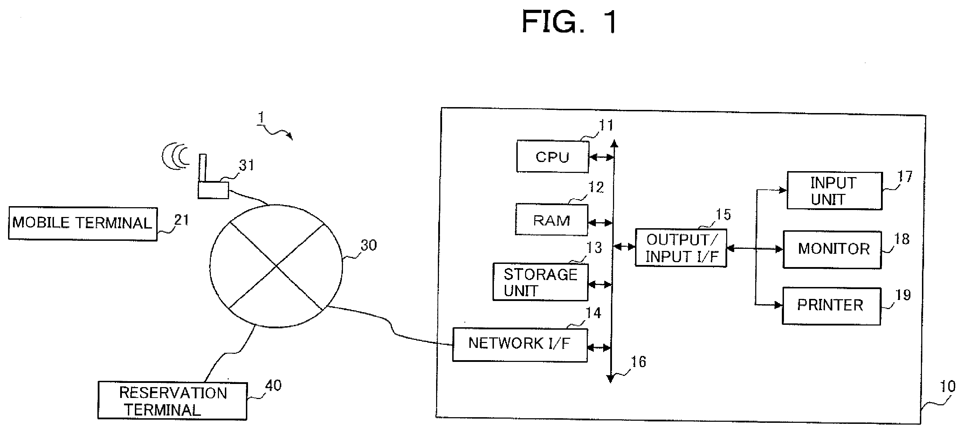

Fig. 1 is a view which shows an outline of a schedule table creation system according to this embodiment. As shown in Fig. 1, the schedule table creation system 1 according to this embodiment is configured so that in an inspection company which inspects a building, a schedule table creation device 10 for creating an inspection schedule table and a reservation terminal 40 to be operated by a customer requesting the inspection company for inspection are connected via a public network (network) 30 such as the Internet by wires or wirelessly. In addition, in this embodiment, a mobile terminal 21 operated by each inspector belonging to the inspection company is wirelessly connected with a base station 31 connected to the public network 30. A schedule table for the inspector who uses the mobile terminal 21 is sent from the schedule table creation device 10 to the mobile terminal 21 and displayed on the screen of the mobile terminal 21.

The schedule table creation device 10 has an output unit for output of a created report in addition to the same configuration as an information processing device such as an ordinary server or PC (Personal Computer). Specifically, in the schedule table creation device 10 according to this embodiment, a CPU (Central Processing Unit) 11, RAM (Random Access Memory) 12, storage unit 13, network I/F (InterFace) 14, and output/input I/F 15 are connected via a bus 16.

The CPU 11 is a computing means and controls operation of the entire schedule table creation device 10. The RAM 12 is a volatile storage medium capable of reading and writing information at high speed and used as a working area for information processing by the CPU 11.

The storage unit 13 includes a ROM (Read Only Memory) and HDD (Hard Disk Drive). The ROM is a read-only nonvolatile storage medium. The HDD is a nonvolatile storage medium capable of reading and writing information and stores an OS (Operating System) and various control programs and application programs, etc. In addition, the HDD stores an inspector master, inspector calendar, and inspector allocation table which are characteristic of this embodiment, and also stores a task allocation program which automatically allocates inspections referring to these data and creates a report based on it. The above various data and task allocation program will be described in detail later.

The network I/F 14 connects various types of hardware with the public network (network) 30 via the bus 16 and controls them.

The output/input I/F 15 connects various types of hardware with an input unit 17, monitor 18 and printer 19 via the bus 16 and controls them. The input unit 17 is a user interface for the user to enter information in the schedule table creation device 10, such as a keyboard or mouse. The monitor 18, configured with a device such as an LCD (Liquid Crystal Display), is a visual user interface for the user to check the state of the schedule table creation device 10 and a report created by it. The printer 19 is an output unit which prints a report created by the schedule table creation device 10 on a paper medium. The monitor 18 and printer 19 are destinations for output of the report created by the schedule table creation device 10.

In this hardware configuration, the task allocation program stored in a storage medium such as the ROM, HDD or an optical disk (not shown) is loaded on the RAM 12 and run under the control of the CPU 11, thereby making up a software control section. The software control section thus made up and the hardware are combined to make functional blocks which implement the functions of the schedule table creation device 10 according to this embodiment.

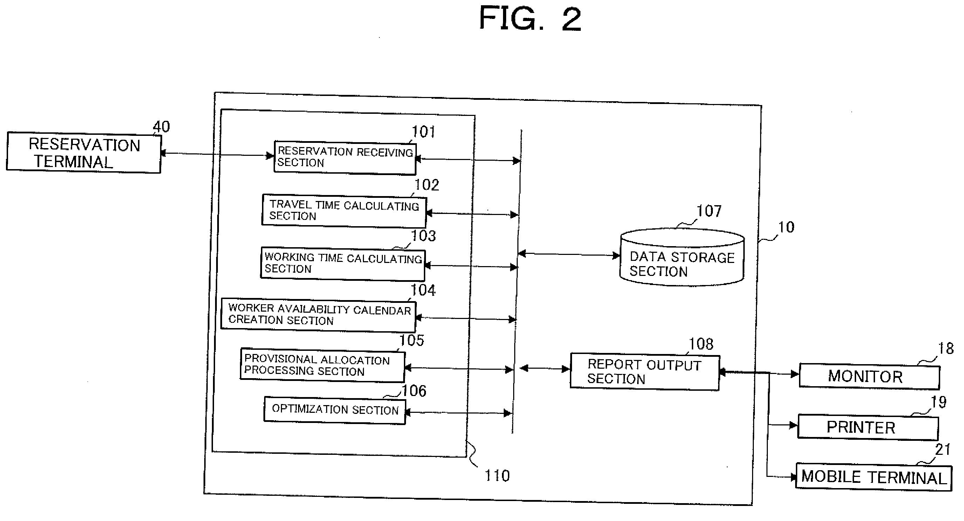

Next, the functional blocks of the schedule table creation device 10 will be described referring to Fig. 2. Fig. 2 is a block diagram which shows the functional blocks of the schedule table creation device. The schedule table creation device 10 includes a data storage section 107, report output section 108, and control section 110. The control section 110 includes a reservation receiving section 101, travel time calculating section 102, working time calculating section 103, worker availability calendar creation section 104, provisional allocation processing section 105, and optimization section 106.

As the reservation receiving section 101 receives inspection reservation information including the content of a reservation for a job from the reservation terminal 40, it judges whether an inspector capable of handling the job is available or not and transmits back the judgement result to the reservation terminal 40. Furthermore, the reservation receiving section 101 provisionally allocates the job to an inspector judged as capable of handling the reserved job. Here, "job" generically means one or more inspections which are conducted during a single visit to a building. For example, one job may include only inspection "a" or a plurality of inspections of different types, for example, inspection "a" and inspection "b". Also, "allocation" means that at the time of receiving inspection reservation information, judgement is made on the basis of travel time and working time as to whether an inspector is available or not and if judged as available, the inspector is provisionally allocated as the person in charge of the job in question. The allocation here is once cancelled in the optimization process which will be described later. Then, allocation is made again so as to minimize the travel time and the inspector who should handle the job actually is determined. The process which determines the inspector to be in charge of the job actually in this way is called the "actual allocation process." The after-mentioned "optimization process" refers to the actual task allocation process.

The travel time calculating section 102 calculates travel time for the inspector to travel between two different points and arrival time. The travel time calculating section 102 calculates travel time as indicated by Equation (1) below in which one point (hereinafter called "departure point"), the other point (hereinafter called "arrival point") and travel means are variables.

$$\text{Travel time=f (departure point, arrival point, travel means) ... (1)}$$

Regarding the departure point and the arrival point in Equation (1), the travel time calculating section 102 makes a calculation on the basis of the departure point and arrival point which are registered in the inspector master which will be described later, and the property location included in the inspection reservation information. If public transport is selected as the travel means, the travel time calculating section 102 searches the nearest stations on the basis of the addresses of the departure point and arrival point and searches the route for the shortest travel time. The travel cost may be included as a route search condition, namely a variable in Equation (1) to search the route for the lowest travel cost to calculate the travel time. If a vehicle is selected as the travel means, a car route may be searched on the basis of the addresses of the departure point and arrival point to calculate the travel time.

The working time calculating section 103 calculates the required time to conduct each of inspections included in each job, as working time. Working time differs depending on the type of inspection, the structure, use, total floor area, etc. of the property to be inspected. Therefore, as indicated by Equation (2) below, the working time calculating section 103 previously stores a working time calculation function for each type of inspection in which structure, use, and total floor area are variables. Then, it selects the function suitable for the type of inspection included in each job and applies the structure, use and total floor area of the property to it to calculate working time.

$$\text{Working time=}9_a\text{(x, y, z) ... (2)}$$

where

$9_a$: working time calculation function when the type of inspection is inspection "a"
x: structure of the property
y: use
z: total floor area

Variables x, y, z are just an example and the type and number of variables are not limited to them.
If one job includes a plurality of inspections, for example, inspection "a" and inspection "b", the working time calculation function suitable for each inspection is selected and working time is calculated for each inspection. Then, working time for inspection "a" and working time for inspection "b" are added to calculate total working time for the job concerned. In calculation of working time, addition is just an example; instead, it is possible to select the longest working time or add various calculation formula or conditions.
Furthermore, even for the same inspection, working time differs depending on the level of skill of the inspector or the existence or non-existence of a person accompanying the inspector. Therefore, an inspector attribute related to the length of working time may be preset as a working coefficient to calculate working time using it. In this case, the working time calculation function is expressed by Equation (3).

$$\text{Working time=}9_a\text{(x, y, z)} \times \alpha \text{ ... (3)}$$

where

9a: working time calculation function when the type of inspection is inspection "a"
x: structure of the property
y: use
z: total floor area
$\alpha$: working coefficient determined for each inspector

Here, working coefficient $\alpha$ is a coefficient which is determined in consideration of the level of skill of an inspector and the existence or non-existence of a person accompanying the inspector. The value of working coefficient is assumed as 1.0 for the level of skill of the model inspector and if the inspector has a higher level of skill than it, the inspector can do the same work in a shorter time and thus the working coefficient is set to a value lower than 1.0. On the other hand, if the inspector has a lower level of skill than the model inspector, the working coefficient is set to a value higher than 1.0. Furthermore, if there is a person accompanying the inspector, for example, the inspector is always accompanied by an assistant such as an inspector in training or a driver and does not work alone or the inspector is accompanied by a person working together with a person with a certain working coefficient or higher, when the accompanying person does auxiliary work during the inspection, working time can be shorter than when the inspector conducts the inspection alone. Therefore, the working coefficient is set to a value lower than 1.0.

Working coefficient $\alpha$ may be set for each worker or may be, in more detail, set for each unit of inspection by each worker. For example, if Inspector A has worked for a relatively large number of years, the working coefficient for the inspector may be set to 0.7. If he/she has a relatively high level of skill for inspection "a", the working coefficient may be set to 0.7 and if he/she has the same level of skill for inspection "b" as the model inspector, it may be set to 1.0.

The worker availability calendar creation section 104 creates a list which shows the number of available inspectors capable of conducting the inspection included in the inspection request information of each day in a given period, based on the inspection request information received from the reservation terminal 40 (hereinafter called "worker availability calendar").

When the provisional allocation processing section 105 receives an inspection reservation from the reservation terminal 40, it performs a process to allocate the inspection to an inspector available at the time and date included in the inspection request information. The allocation here is provisional for the inspection concerned and at a later date each inspection will be allocated to an inspector who should conduct the inspection actually, by the after-mentioned optimization process.

The optimization section 106 performs the process (actual allocation process) again to allocate all provisionally allocated jobs for a certain workday so that the task time for each inspector is shortest and consequently the task time for the whole inspection company is shortest. "Task time" here means total travel time plus total working time.

The task time for each inspector refers to a time period on a day subject to the optimization process, from when each inspector starts a task until he/she arrives at the end point. The task time for the whole inspection company is calculated by summing up the task times for inspectors on the day subject to the optimization process. The task time may or may not include break time. For example, if all inspectors regularly take the same break time every day, the length of break time does not influence the task time and thus the task time may be calculated without including the break time.

On the other hand, if break time is defined as the sum of mandatory break time and optional break time and the optional break time differs from day to day depending on travel time and working time, the length of break time influences the task time, so the task time including break time may be calculated. For example, let's assume that the maximum break time is specified as one hour and mandatory break time is 30 minutes and optional break time is 30 minutes. In this case, if one hour of break time is taken and the time of arrival at the end point is before the finish time prescribed in the inspector master, one hour of break time may be taken. On the other hand, if the time of arrival at the end point is calculated to be about 15 minutes later, total break time may be set to 45 minutes. The length of break time may be adjusted while the optimization section 106 performs the actual allocation process.

In this embodiment, the actual allocation process is performed so as to minimize the total travel time in order to minimize the task time for each inspector. Then, task allocation is made so that as a result of minimizing the task time for each inspector, the task time for the whole company is shortest.

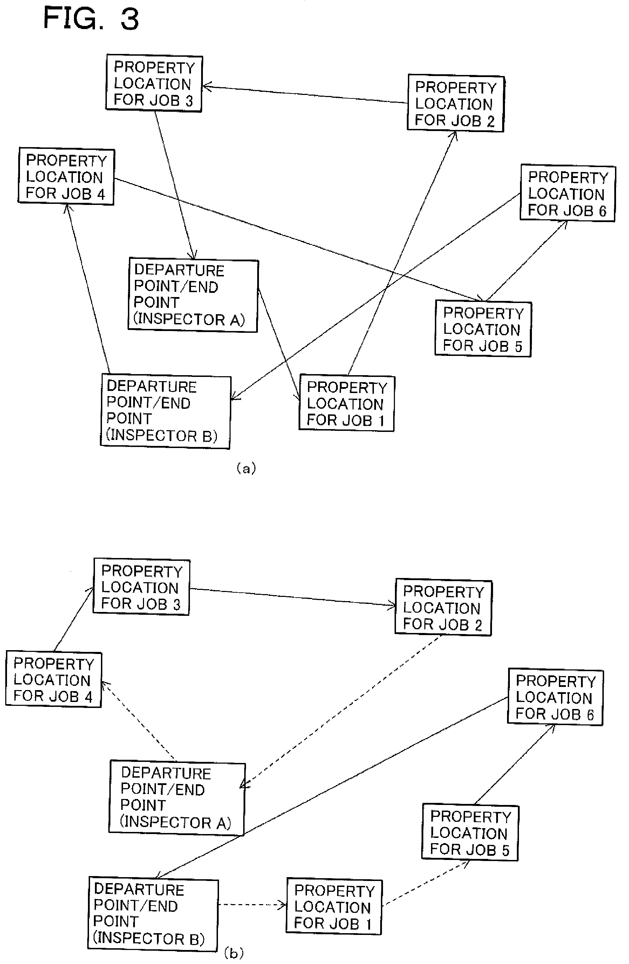

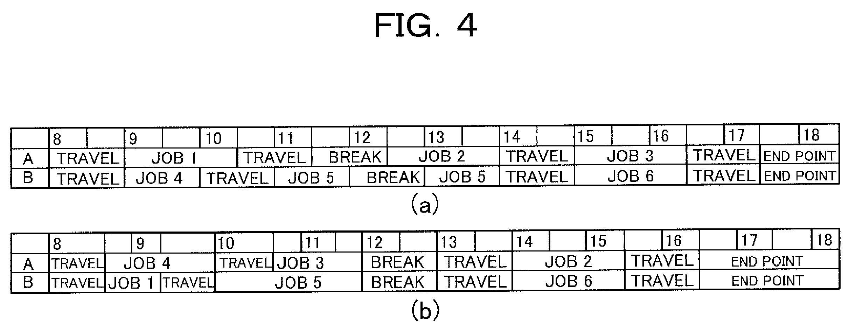

The concept of optimization will be described below referring to Figs. 3 and 4. Fig. 3 is a diagram which shows an example of route change before and after optimization, in which (a) shows a route before the optimization process and (b) shows a route after the optimization process. Fig. 4 is a diagram which shows an example of change of a time chart before and after optimization in Fig.3, in which (a) shows a time chart before the optimization process and (b) shows a time chart after the optimization process.

The state of provisional allocation of jobs by the provisional allocation processing section 105 is shown in Fig. 3(a). In the provisional allocation process, Inspector A is assumed to travel in the following order: departure point to the location of the property for the first job to the location of the property for the second job to the location of the property for the third job to the end point. In this case, as shown in Fig. 4(a), the task time for Inspector A is from departure from the departure point at 8:00 to arrival at the end point at 17:30. In this case, the task time for Inspector A is 9 hours and 30 minutes. On the other hand, in the provisional allocation state, Inspector B is assumed to depart from the departure point at 8:00 and travel in the following order: departure point to the location of the property for the fourth job to the location of the property for the fifth job to the location of the property for the sixth job to the end point; and he/she is assumed to arrive at the end point at 17:30 (see Fig. 3(a) and Fig. 4(a)). In this case as well, the task time for Inspector B is 9 hours 30 minutes. If there are only Inspectors A and B in the inspection company, the task time for the whole inspection company is 19 hours (9 hours 30 minutes + 9 hours 30 minutes).

Here, let's assume that the location of the property for the first job is nearer to the departure point for Inspector B than the departure point for Inspector A and the location of the property for the fourth job is nearer to the departure point for Inspector A than the departure point for Inspector B. Thus, the first job allocated to Inspector A and the fourth job allocated to Inspector B are exchanged and reallocated. As a consequence, as shown in Fig. 3(b), Inspector A travels from the departure point to the fourth job. Then, since the third job is nearer to the fourth job than the second job, the inspector travels from the fourth job to the third job, then to the second job. Therefore, after optimization, Inspector A travels from the departure point to the fourth job, then to the third job, then to the second job and then to the end point. Consequently, the travel time from the departure point to the fourth job and the travel time from the fourth job to the third job are each shortened by 30 minutes (see Fig. 4(b)).

Here, assuming that the working coefficient for Inspector A is 1.5 and the working coefficient for Inspector B is 1.0, Inspector A requires working time of 1.5 hours (1 hour × 1.5) for the fourth job which requires working time of 1 hour for Inspector B. Therefore, in the time chart for Inspector A after optimization, he/she departs from the departure point at 8:00 and arrives at the end point at 16:30 and his/her task time is 8 hours 30 minutes as shown in Fig. 4(b). Consequently, the task time for Inspector A is shortened one hour by the optimization process.

On the other hand, as shown in Fig. 3(b), Inspector B travels from the departure point to the first job, then to the fifth job, then to the sixth job and then to the end point. The travel time from the departure point to the first job and the travel time from the first job to the fifth job are assumed to be each shortened by 30 minutes. Also, Inspector B can finish the first job for which Inspector A requires 1.5 hours of working time, in one hour (1.5 ÷ 1.5). Therefore, in the time chart for Inspector B after optimization, he/she departs from the departure point at 8:00 and arrives at the end point at 16:30 and his/her task time is 8 hours 30 minutes as shown in Fig. 4(b). Consequently, the task time for Inspector B is also shortened one hour by the optimization process. As a consequence, the task time for the whole company is shortened 2 hours (1 hour × 2).

The state in which the task time for each inspector and the whole company cannot be further shortened as a result of the actual job allocation process as mentioned above is called the optimized state.

Let's assume another example of optimization that a certain job includes a plurality of inspections of different types, inspection "a" and inspection "b". Here, let's assume that Inspector A only has a skill to conduct inspection "a" and his/her working coefficient is 1.5 and the working time for inspection "a" in this job is 1.5 hours. Let's assume that Inspector C only has a skill to conduct inspection "b" and his/her working coefficient is 0.75 and the working time for inspection "b" is 1.5 hours. In this case, the total working time of Inspector A and Inspector C is 3 hours.

For the above job, both Inspectors A and C must be dispatched; assuming that the travel time from the last place of stay of each of Inspectors A and C to the location of the property concerned is 1 hour and the travel time from the location of the property to the next place of stay is 1 hour, the total travel time for both the inspectors is 4 hours. Therefore, the task time required for the company to deal with the above job is 3 hours of working time and 4 hours of travel time, a total of 7 hours.

Here, let's assume that Inspector B has a skill to conduct both inspections a and b and his/her working coefficient is specified as 1.0. If Inspector B conducts the above inspection "a", the working time is 1 hour (1.5 ÷ 1.5) and if he/she conducts inspection "b", the working time is 2 hours (1.5 ÷ 0.75).

On the other hand, assuming that the travel time from the last place of stay for Inspector B to the location of the property for this job is 1 hour and the travel time from the location of the property to the next place of stay is 1 hour, the total travel time is 2 hours. Since Inspector B can handle this job alone, if Inspector B handles the job alone, the working time is 3 hours and the travel time is 2 hours and a total of 5 hours is task time for the job for the company. Therefore, when actual allocation is made in consideration of the number of skills which inspectors have, the number of inspectors to be dispatched may be different even if the total working time is the same and as a consequence, the total travel time may be shortened. Generally when the number of dispatched inspectors is smaller, the travel cost is lower.

As mentioned above, the point to be noted in optimization is that at least one or more factors including travel time, working time, the number of dispatched inspectors for one job and travel cost may be combined as appropriate.

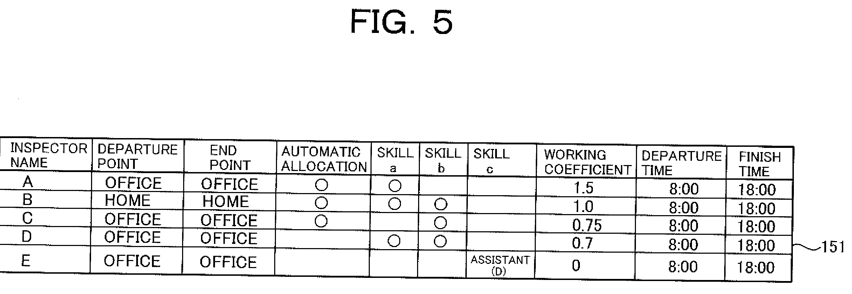

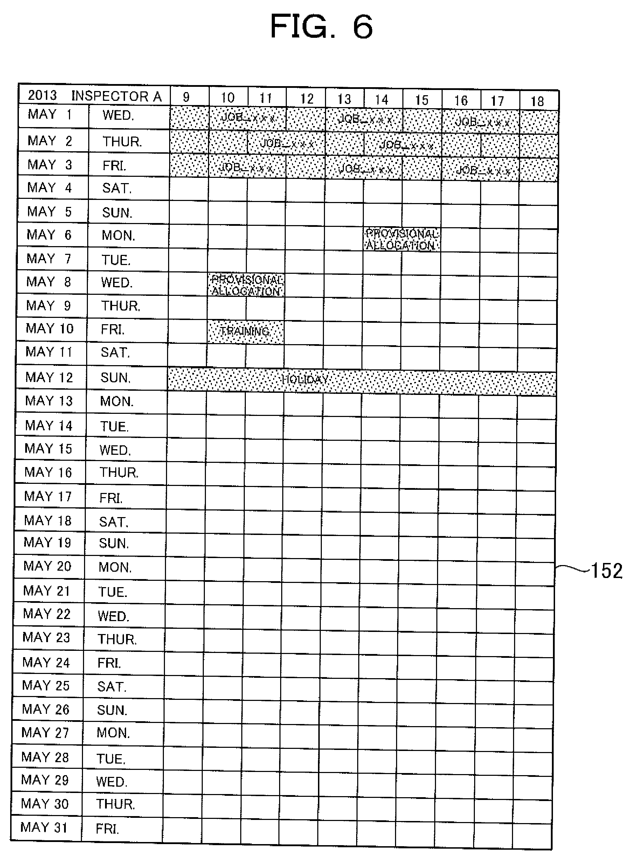

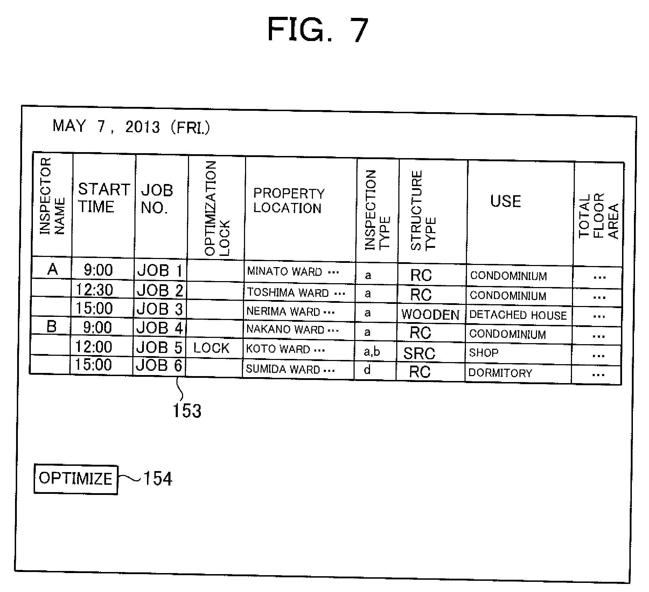

The data storage section 107 stores various data required to create a schedule table in a fixed manner. Specifically, it stores an inspector master stating the attribute of each inspector, an inspector calendar storing jobs provisionally allocated to each inspector and days and times for which jobs cannot be allocated, including the schedule except inspections such as each inspector's rest time (including daily and hourly rest), and an inspector allocation table storing jobs allocated to each inspector. Furthermore, it may store customer data which contains customer identification information for uniquely identifying customers and the log-in passwords determined by the customers in a correlated manner. Next, an example of data stored in the data storage section 107 will be described referring to Figs. 5 to 7. Fig. 5 is a diagram showing the structure of an inspector master. Fig. 6 is a diagram showing an inspector calendar. Fig. 7 is a diagram showing an example of a screen display indicating an inspector allocation table.

The inspector master 151 shown in Fig. 5 is a database which records the attributes of inspectors belonging to an inspection company. More specifically, the inspector master 151 contains inspector identification information by which an inspector is uniquely identifiable (for example, "Inspector Name"), the inspector's "Departure Point", "End Point", "Automatic Allocation", the inspector's "Skill" (for example, qualification name and type of task), "Working Coefficient", "Departure Time", and "Finish Time" in a mutually correlated manner. "Departure Point" and "End Point" may be each inspector's home or the office to which the inspector belongs. "Automatic Allocation" is a field which holds a flag to judge whether or not the inspector is subject to automatic provisional allocation or actual allocation when the provisional allocation processing section 105 and the optimization section 106 make a provisional allocation or actual allocation of a job. If there is no flag (not acceptable) in this field, the inspector is an inspector who is subject only to manual allocation, such as an inspector who works only during the on-season or a person having a plurality of skills.

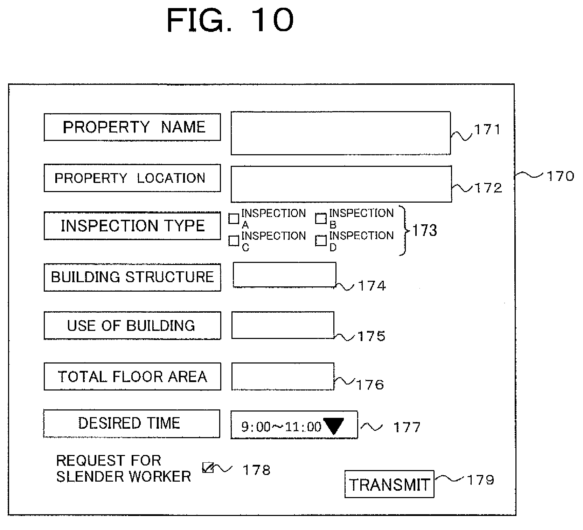

In addition, the inspector master 151 indicates whether or not the inspectors have three skills, "skill a", "skill b", and "skill c", but the number of skill types is not limited thereto. For example, for a building inspection company, a concrete example of "skill" includes qualifications for various inspections such as a qualification to conduct the strength test of a structure, a qualification to calculate the defect liability and damage insurance rate, and a qualification to evaluate the eligibility for loan from a housing loan corporation. "Working coefficient" is the same as the working coefficient used in the aforementioned Equation (3). "Skill" may include the worker's attribute, for example, the worker's body type information (whether or not slender or small in stature). Based on this information, a slender or small worker may be preferentially allocated to a property where a working hole or working space is relatively narrow. In this case, the after-mentioned inspection reservation screen in Fig. 10 may have a field to designate a slender or small worker.

"Departure Time" is the earliest time of departure from the "Departure Point" and "Finish Time" is the latest time of arrival at the "End Point". In the inspector master 151, "Assistant (D)" is written in the "Skill c" field of Inspector E, which indicates that Inspector E always accompanies Inspector D as an assistant to Inspector D. Inspector D can finish work in a short time with the assistance of Inspector E in inspection. So, let's assume that the "working coefficient" of Inspector D is 0.7. Since Inspector E is a so-called assistant who has no skill (qualification), his/her "working coefficient" is determined as 0. An assistant is static (registered in the master fixedly) or dynamic. If dynamic, the assistant can be allocated for a pair in the inspector allocation table 153.

The inspector calendar is created for each inspector. Fig. 6 shows an inspector calendar 152 of May 2013 for Inspector A. Each inspector enters time zones for plans irrelevant to inspections in his/her own inspector calendar 152 in advance. The time zones entered here cannot be used for provisional allocation and actual allocation of jobs. The number of workers in the worker availability calendar is also decreased. When a job is automatically allocated, "Provisional Allocation" is written in the relevant time zone of the inspector calendar 152. Although "Provisional Allocation" is written in Fig. 6, instead information which enables unique identification of the provisionally allocated job (for example, job number) may be written. Furthermore, when actual allocation is made by the optimization section 106, the actually allocated job is registered in the inspector calendar 152. In the inspector calendar 152 in Fig. 6, from May 1 to May 3, the names of jobs actually allocated to Inspector A by the after-mentioned optimization process and working hours for the jobs are stated. Also "Training" is entered for May 10 and "Holiday" is entered for May 12 and no jobs are provisionally and actually allocated for these days. The calendar may be designed so that when a mouse cursor is put on a plan written in the inspector calendar 152, a popup view of detailed information on the plan appears.

The inspector allocation table 153 in Fig. 7 stores detailed information on jobs provisionally allocated by the provisional allocation processing section 105 and inspector identification information in a correlated manner. Fig. 7 shows the inspector allocation table 153 displayed on the screen of the monitor 18, which stores jobs of May 7, 2013 allocated to inspectors. The screen displays an OPTIMIZE button 154 to enter an instruction to execute the optimization process, as well as the inspector allocation table 153.

The inspector allocation table 153 contains various fields which store the following: "Inspector Name" by which an inspector can be identified uniquely; work "Start Time" of each job; "Job Number" for identifying each job uniquely; "Optimization Lock" to hold a flag to identify a job not subject to the optimization process; "Property Location" to store the address of the property as the object of a job; "Inspection Type" to store the type of inspection included in each job; "Structure Type" as the property's attribute (corresponding to the structure of the property in Equation (3)); "Use"; and "Total Floor Area". Among them, "Job Number" is automatically issued and entered in the order in which the reservation receiving section 101 receives inspection reservation information from the reservation terminal 40. Also, the provisional allocation processing section 105 registers the work start time of each job as calculated when provisional allocation was made.

"Optimization Lock" excludes a job corresponding to a flag held in the "Optimization Lock" field, from actual allocation when the optimization section 106 starts the optimization process upon operation of the OPTIMIZE button 154, namely indicates that Inspector B has been already actually allocated to the fifth job which corresponds to the flag entered in the "Optimization Lock" field. A flag is manually entered in the "Optimization Lock" field by an operator as necessary, for example, when a customer designates an inspector.

In the inspector allocation table 153, "Property Location", "Inspection Type", "Structure Type", "Use", and "Total Floor Area" are acquired from the inspection request information which the reservation receiving section 101 has received from the reservation terminal 40 and they are updated and stored. The inspection request information may be received not only from the reservation terminal 40 but also acquired from the company's own system which is linked or connected to the schedule table creation device 10 and stores inspection request information. The inspector allocation table 153 may contain a field for entry of "Property Name" such as a condominium name or a field for entry of "Building Certification Number", though omitted in Fig. 7. If the property is under construction and its official name is not determined yet, the building certification number is useful as information for uniquely identifying the property for the job.

The data structures of the inspector master 151, inspector calendar 152 and inspector allocation table 153 as mentioned above are just examples but they may be different as a result of normalization. In addition, further detailed information may be added. The data storage section 107 stores templates for various screens displayed during operation of the schedule table creation system 1.

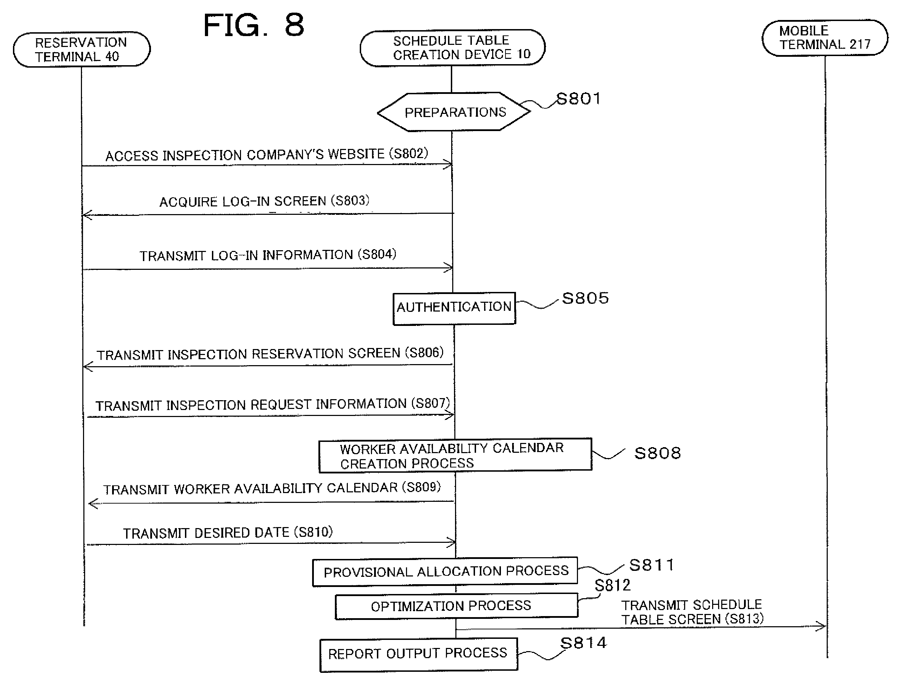

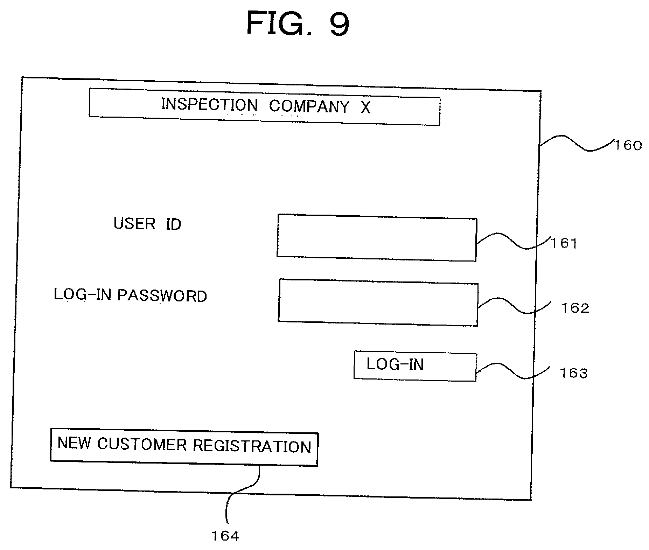

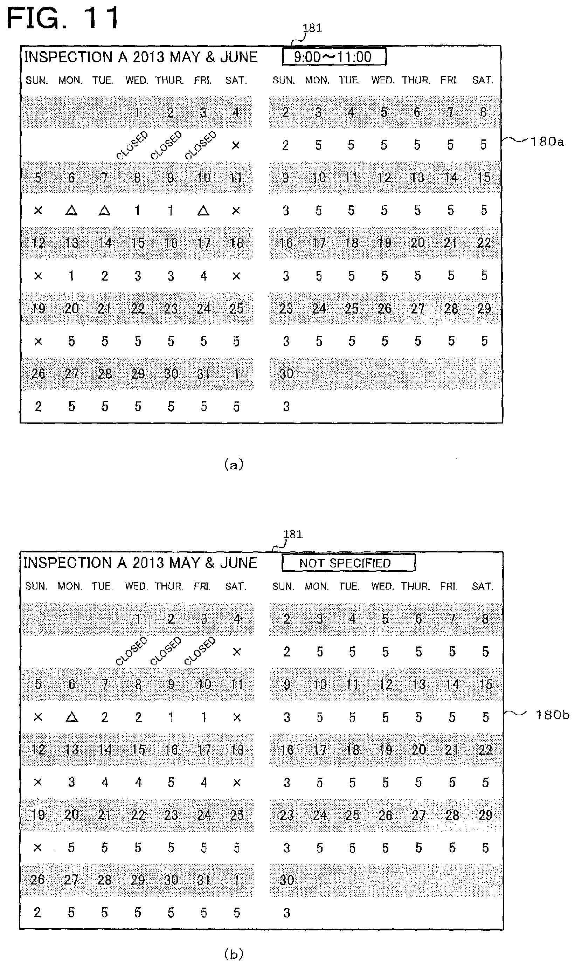

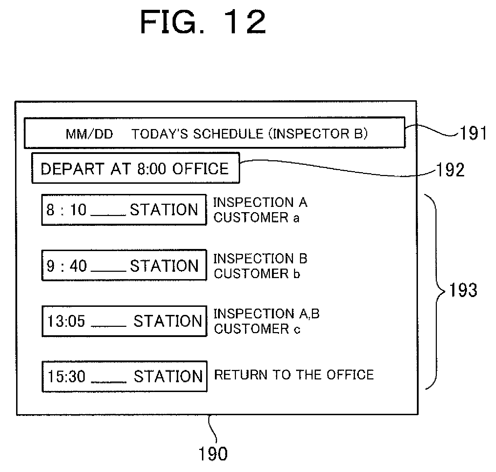

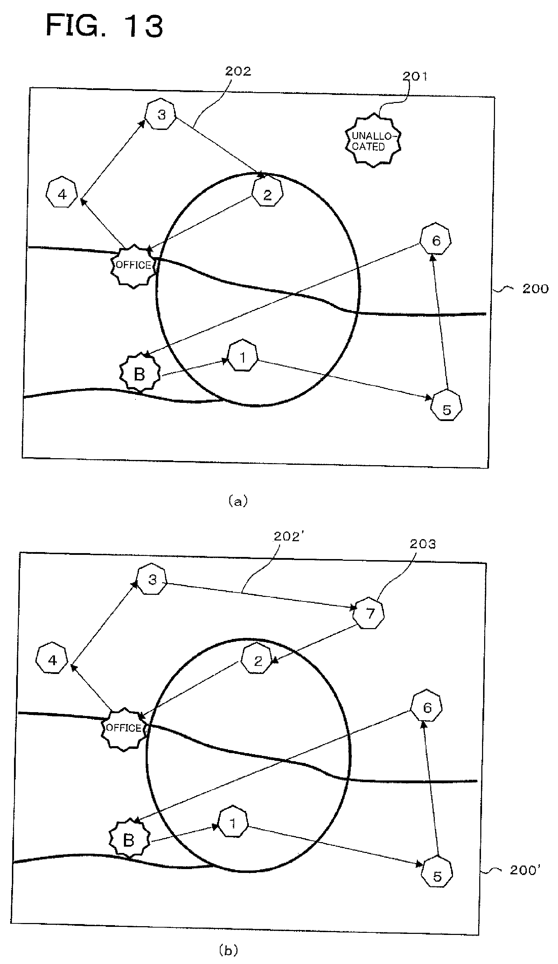

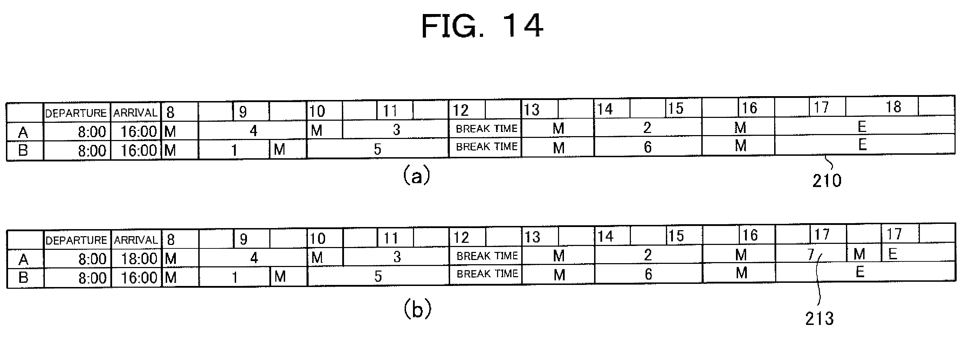

The schedule table creation system 1 according to this embodiment receives an inspection request and performs a worker availability calendar creation process to display inspector availability, a provisional allocation process to provisionally allocate an inspection to an inspector, and an optimization process to allocate a job on a particular workday to an inspector. Among them, in the worker availability calendar creation process and the provisional allocation process, priority is given to quicker display of processing result on the reservation terminal 40 and in the optimization process, higher priority is given to execution of the task allocation process to minimize the task time than to the display speed. So, the sequence of execution of the above processes in a series of steps from when the schedule table creation system 1 receives an inspection request from the reservation terminal until it performs actual allocation will be described referring to Figs. 8 to 14. Fig. 8 is a flowchart which shows the operation sequence of the schedule table creation system 1. Fig. 9 is a diagram which shows a log-in screen. Fig. 10 is a diagram which shows an inspection reservation screen. Fig. 11 is a diagram which shows a worker availability calendar. Fig. 12 is a diagram which shows a schedule table screen. Fig. 13 is a diagram which shows a map report, in which (a) shows one before manual adjustment and (b) shows one after manual adjustment. Fig. 14 is a diagram which shows a map report, in which (a) shows one before manual adjustment and (b) shows one after manual adjustment. Next, an explanation will be given in the order of the steps in Fig. 8.

As shown in Fig. 8, preparations are made prior to starting the schedule table creation system 1 (S801). The inspector master 151 and inspector calendar 152 are stored in the data storage section 107 of the preservation table creation device 10 and necessary items are registered there. Furthermore, the form of the inspector allocation table 153 and screens displayed as needed are generated in advance and stored in the data storage section 107. Although not shown in this embodiment, a customer master which records transactions between a party requesting an inspection such as an architectural firm (hereinafter called "customer") and the inspection company (table which stores user ID for identifying the customer uniquely, log-in password, etc.) is created and stored in the data storage section 107.

The homepage HP of the inspection company is accessed from the reservation terminal 40 operated by the customer via the public network 30 (S802) and the log-in screen is acquired from the reservation receiving section 101 (S803). The log-in screen 160 in Fig. 9 includes a "User ID" input field 161, "Log-in Password" input field 162, and LOG-IN button 163. As the customer enters the user ID and log-in password on the screen of the reservation terminal 40 and operates the LOG-IN button 163, this log-in information is sent to the schedule table creation device 10 (S804). The log-in screen 160 may contain an operation button 164 to encourage a customer requesting an inspection for the first time to make customer registration. When this operation button 164 is operated, the reservation receiving section 101 transmits the screen for entry of customer information to the reservation terminal 40 and registers the information entered on the screen in the customer master.

The reservation receiving section 101 performs a customer authentication process referring to the log-in information and customer master (S805). If the authentication process is successful, an inspection reservation screen 170 is sent from the reservation receiving section 101 to the reservation terminal 40 (S806).

The inspection reservation screen 170 shown in Fig. 10 includes a "Property Name" input field 171 for the property to be inspected, "Property Location" input field 172, "Inspection Type" input field 173, "Building Structure" input field 174 for the object of inspection, "Use of Building" input field 175, "Total Floor Area" input field 176, "Desired Time/Date" select button 177, checkbox 178 for designating a slender worker, and "SEND" button 179. When the customer enters necessary items and operates the "SEND" button 179, the information indicating the entered reservation content (hereinafter called "inspection request information") is sent to the reservation table creation device 10 (S807). In Fig. 10, the "Desired Time/Date" button 177 is used to display the worker availability calendar.

The worker availability calendar creation section 104 refers to the inspector master 151 and inspector calendar 152 on the basis of the inspection request information, judges whether or not an inspector who can handle the inspection request information in a given period, for example, the next two months, is available, creates a worker availability calendar showing the judgement result (S808) and transmits it to the reservation terminal 40 (S809). The worker availability calendar 180a shown in Fig. 11(a) indicates information on availability of workers who can conduct inspection "a" in the two months of May and June of 2013. "Closed" denotes a date on which reception of an inspection request was closed; the number in each date field denotes the number of remaining inspectors available for automatic allocation; "△" indicates that a manually allocatable inspector is available; and "×" indicates that an appropriate inspector is unavailable. The "desired time" select button 181 is designed to enable selection of the list view button (triangular button in the figure); but instead it may be designed so that the desired time zone can be entered. If the "Not specified" option is provided in the list view button, a reservation can be made without specifying the time. Fig. 11(a) shows a worker availability calendar 180a in which "9:00-11:00" is specified in the "desired time" select button 181. By changing the time in the desired time field 181 of the worker availability calendar 180a, inspector availability in another time zone can be displayed. For example, in the worker availability calendar 180b shown in Fig. 11(b), by selecting "Not specified" in the desired time field 181, a relieved inspector reservation condition is displayed. For example, while in the worker availability calendar 180a (see Fig. 11(a)), a triangle is shown for May 7, suggesting that no inspector is available for automatic allocation and an inspector is available for manual allocation, in the worker availability calendar 180b (Fig. 11(b)) "2" is shown. In other words, when the time is not specified, the availability condition is improved and a reservation for that day can be made in a definite manner. Here "definite" means that an inspector can be surely reserved by automatic allocation in the after-mentioned provisional allocation process.

When the customer selects and clicks the desired date from the dates with numbers in the worker availability calendar on the screen of the reservation terminal 40, the desired date is sent to the reservation table creation device 10 (S810). Although the user can select "Δ" and "×", the selection information is merely stored in an area (not shown) of the storage unit 13 of the reservation table creation device 10 and the automatic allocation process is not executed. According to the stored selection information, when a reservation for the selected date is cancelled and the number of remaining inspectors available for automatic allocation becomes 1 or more, or when an inspector subject to manual allocation becomes available, the reservation terminal 40 may be notified that appointment becomes possible. In the case of "Δ", work may be allocated to the inspector by manual allocation after the after-mentioned optimization process, so as to respond to the request from the customer. The reservation receiving section 101 provisionally allocates the inspection included in the inspection request information to an inspector subject to automatic allocation and provisionally registers the inspector in the inspector calendar 152 and inspector allocation table 153 (S811).

Several days before the day of inspection, the operator of the reservation table creation device 10 performs the optimization process of the provisionally allocated jobs (S812). In the optimization process, reallocation (actual allocation) is made for a workday in consideration of travel time and working time so as to minimize the task time for each inspector.

The report output section 108 of the reservation table creation device 10 creates and outputs various reports on the basis of the optimized inspector allocation table 153. As one form of such output, it creates a schedule table screen which shows a plan of action on a certain workday (hereinafter called the "specific day") after the optimization process and transmits it to the mobile terminal 21 of each inspector (S813). The schedule table screen 190 in Fig. 12 shows the date as the specific day for Inspector B and the inspector name (sign 191); departure point and departure time (sign 192); and boarding time, boarding station name, inspection type, and customer name along the traveling route (sign 193). This display information is just an example and it only has to contain the jobs which the inspector concerned is in charge of, and the order of the jobs on the day. If it is unnecessary to transmit the schedule table screen 190, this step is omissible.

Furthermore, the report output section 108 may create and output a report in another form on the basis of the optimized inspector allocation table 153 (S814). As an example of report output form, for example, as shown in Fig. 13(a), a map report 200 which plots the route and jobs of each inspector on map information may be used. This map report 200 visualizes the traveling route of each inspector. By registering on the map report 200 the property location 201 for a new job to which no inspector is allocated, using the input unit 17 such as a mouse or touch pad and manually entering the traveling route 202 of a given inspector, for example, Inspector A so as to pass through the property location for the new job, the unallocated job (job 7) may be allocated to Inspector A to change the traveling route of Inspector A, as illustrated in the revised map report 200' shown in Fig. 13(b) (which corresponds to sign 202'). In this case, for example, the reservation receiving section 101 may automatically issue a number to the new job, allocate it to Inspector A and update the inspector allocation table 153 according to input instructions from the input unit 17. It is possible to change the person in charge, route order and desired date. By using this function, not only the map report 200 visualizes the traveling route of each inspector but also a simulation of change of the route order, change of the person in charge and change of the desired date (for example, to know if the first to third desired dates are given, which date and which route may lead to the highest efficiency) can be made on the map report 200.

In addition, as shown in Fig. 14(a), a time table 210 which illustrates the working processes for all inspectors as shown in Fig. 14(a) may be created. This time table 210 can visualize the task time for each inspector. In the time table 210, M denotes travel, B denotes "break time" and a number denotes a job number. When a new job 213 is registered in the time table 210 (see Fig. 14(b)), the reservation receiving section 101 may automatically issue a number to the new job, allocate it to Inspector A and update the inspector allocation table 153 according to input instructions from the input unit 17. The time table 210 may be designed to enable addition of new break time and alteration of a previously allocated job. The time table 210 can visualize time when workers are available. Another example of report may be a written business trip order. This step is omissible if output of reports is not required.

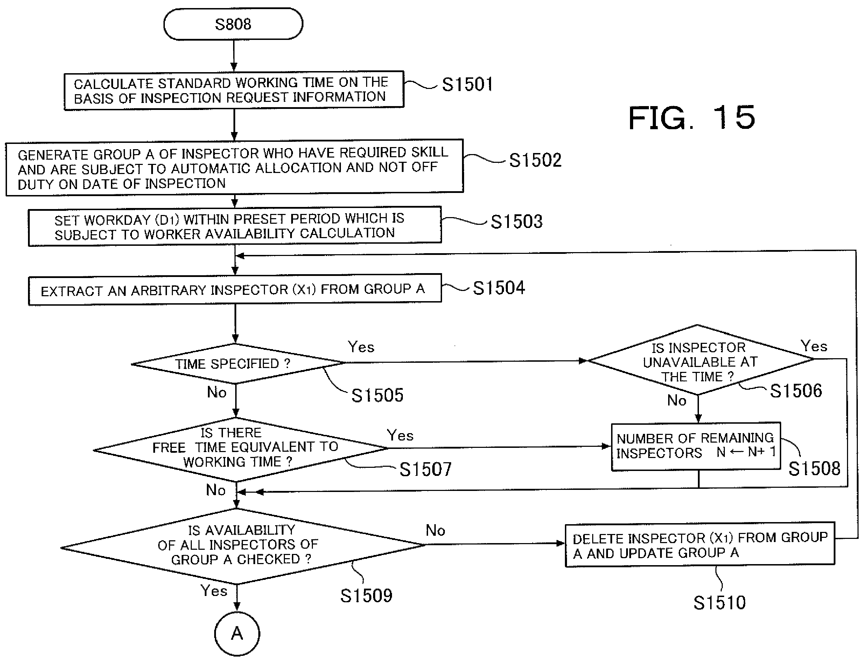

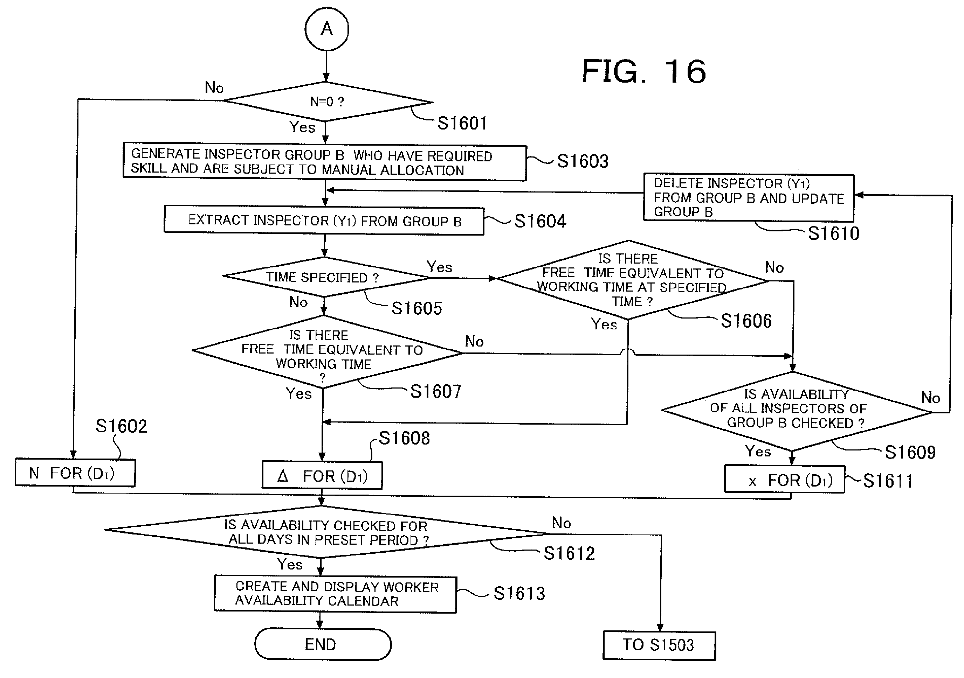

Next, step S808 in Fig. 8 for the process of creating a worker availability calendar will be described referring to Fig. 15 and Fig. 16. Fig. 15 is a flowchart showing the first half of the worker availability calendar creation process.

Fig. 16 is a flowchart showing the second half of the worker availability calendar creation process. Next, the process will be described in the order of the steps shown in Figs. 15 and 16. Prior to the worker availability calendar creation process in Fig. 15, parameter N indicating the number of remaining available inspectors is initialized (N=0) though not shown, then the following steps are carried out.

The working time calculating section 103 calculates working time on the basis of inspection request information (S1501). The working time calculated at this step may be standard working time. In many cases, calculation is made with the working coefficient set at 1.0, but if working time is determined with reference to slower workers, calculation may be made with the working coefficient set at a value above 1.0.

Next, referring to inspection request information, the worker availability calendar creation section 104 determines the skill required for the inspection included in the inspection request information. Then it generates a group of inspector(s) who have the skill to meet the inspection request and are subject to automatic allocation and not off duty on the day of inspection (called "Group A"), among the inspectors registered in the inspector master 151 (S1502). In order to know whether an inspector is off duty or not, it refers to the inspector calendar 152. Furthermore, a preset period calculated from the day of receipt of the inspection request information, for example, the next two months, is set and one day in the period is set as workday ($D_1$) which is subject to worker availability calculation (S1503).

The worker availability calendar creation section 104 extracts the first inspector ($X_1$) to be checked for availability, from Group A (S1504). At this step, the order of extraction of inspector ($X_1$) is arbitrary; for example, sorting may be done according to the identification information on the inspectors in Group A so as to extract an inspector in order from the top or bottom of the inspector identification information list after sorting.

Referring to the inspector calendar 152 for the inspector ($X_1$) and if the inspection request information contains specification of time (S1505/Yes) and the inspector is available at the specified time (S1506/No) and if the inspection request information does not contain specification of time (S1505/No) and there is free time equivalent to the working time calculated at step S1501 on the workday ($D_1$), 1 is added to the value N as the number of available inspectors (S1507) and the sequence proceeds to step S1509.

If the inspection request information contains specification of time (S1505/Yes) and the inspector is unavailable at the specified time (S1506/Yes), and if the inspection request information does not contain specification of time (S1505/No) and there is no free time equivalent to the working time calculated at step S1501 on the workday ($D_1$) (S1507/No), the inspector cannot conduct the inspection and thus the value N as the number of available inspectors is not changed and the sequence proceeds to step S1509.

If among Group A there is an inspector whose availability has not been checked (S1509/No), the inspector ($X_1$) is deleted from Group A and Group A is updated (S1510), the sequence goes back to step S1504 where the next inspector ($X_2$) is extracted, and step S1505 and the subsequent steps are repeated. If availability of all inspectors of Group A has been checked (S1509/Yes), the sequence goes to the step of judging value N as the number of available inspectors.

If N is not equal to 0, namely there is one or more inspectors who can be automatically allocated (S1601/No), N is stored as the number of available workers on the workday ($D_1$)(S1602).

If N=0, namely there is no inspector who can be automatically allocated (S1601/YES), it generates a group of inspector(s) who have the skill to meet the inspection request and are subject to manual allocation (called "Group B"), among the inspectors registered in the inspector master 151 (S1603). Then, an inspector ($Y_1$) is arbitrarily extracted from Group B (S1604), and it is judged whether the inspector ($Y_1$) is able to respond to the inspection request. Specifically, if the inspection request information contains specification of time (S1605/Yes) and as a result of reference to the inspector calendar 152 for the inspector ($Y_1$) there is free time equivalent to the working time at the specified time of the workday ($D_1$) (S1606/Yes), and if the inspection request information does not contain specification of time (S1605/No) and there is free time equivalent to the working time calculated at step S1501 on the workday ($D_1$) (1607/Yes), it is judged that an inspector subject to manual allocation is available on the workday ($D_1$), and it is decided that the workday ($D_1$) is marked with $\Delta$ (S1608).

If the inspection request information contains specification of time (S1605/Yes) and the inspector is unavailable at the specified time (S1606/No), and if the inspection request information does not contain specification of time (S1605/No) and there is no free time equivalent to the working time calculated at step S1501 on the workday ($D_1$) (S1607/No), it is decided that the inspector (Y1) cannot conduct the inspection. If among Group B there is an inspector whose availability has not been checked (S1609/No), the inspector ($Y_1$) is deleted from Group B and Group B is updated (S1610), the sequence goes back to step S1604 where the next inspector ($Y_2$) is extracted. Then, step S1605 and the subsequent steps are repeated. If all inspectors of Group B have been checked for availability (S1609/Yes), it is judged that no inspector subject to manual allocation is available on the workday ($D_1$) and it is decided that the workday ($D_1$) is marked with X (S1611).

After steps S1602, S1608, and S1611 are ended, if there is a workday in the specified period for which worker availability has not been checked yet (S16012/No), the sequence goes back to step S1503 where the next workday ($D_2$) is set, then step S1504 and the subsequent steps are repeated. If worker availability has been checked for all days in the specified period (S1612/Yes), a worker availability calendar is created on the basis of the results of steps S1602, S1608, and S1611 and is displayed (S613).

In the worker availability calendar creation process, decision is made as to worker availability at the specified time contained in the inspection request information or if there is no specified time, as to availability of free time equivalent to the standard working time, and based on this, a worker availability calendar is displayed. At this time, the amount of computation may be reduced by not taking travel time into consideration so that the time required to display the worker availability calendar can be shortened.

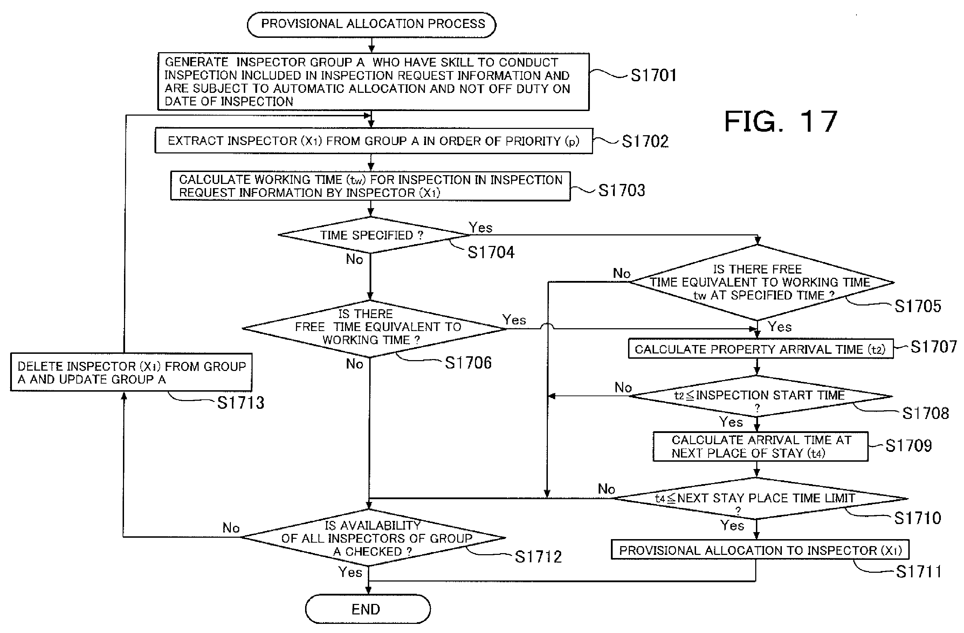

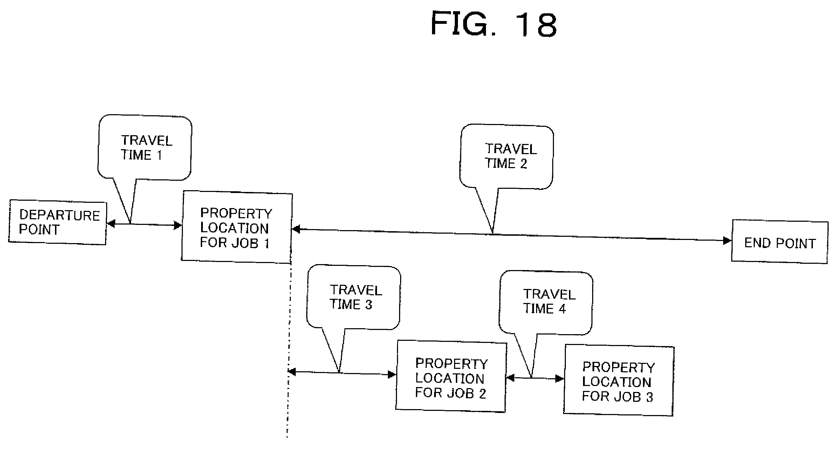

Next, the provisional allocation process at step S811 in Fig. 8 will be described referring to Figs. 17 and 18. Fig. 17 is a flowchart showing the provisional allocation process. Fig. 18 is a diagram showing the travel time calculation process. Next, an explanation will be given in the order of the steps in Fig. 17.

The provisional allocation processing section 105 generates a group of inspector(s) who have the skill to meet the inspection request and are subject to automatic allocation and not off duty on the day of inspection (called "Group A"), among the inspectors registered in the inspector master 151 (S1701). Then it extracts a first inspector ($X_1$) from Group A in the predetermined order of priority (p) (S1702).

Here, the "order of priority" is set as a result of comparison of the number of skills each inspector has, so that higher priority is given to a smaller number of skills. For example, let's assume that Inspector A has skill a and Inspector B has skill a and skill b. In this case, Inspector A is only able to engage in work requiring skill a, but Inspector B is able to engage in work requiring both skills a and b. If the inspection included in the inspection request information only requires skill a, by making the priority of Inspector A higher than the priority of Inspector B, Inspector A is first extracted as inspector ($X_1$) and Inspector B, who has higher work versatility, is reserved. As a consequence, in the future, when there will be a request for inspection which requires either skill a or b or both at a time, Inspector B can meet the inspection request.

The working time calculating section 103 calculates, according to working coefficient, working time $t_w$ required for the inspector ($X_1$) to conduct the inspection included in the inspection request information by applying the working coefficient set for the inspector ($X_1$) (S1703).

The provisional allocation processing section 105 refers to the inspector calendar 152 for the inspector ($X_1$) and if the inspection request information contains specification of time (S1704/Yes) and there is free time equivalent to the working time calculated at step S1703 at the specified time (S1705/Yes), and if the inspection request information does not contain specification of time (S1704/No) and there is free time equivalent to the working time calculated at step S1703 on the workday included in the inspection request information (S1706/Yes), it proceeds to the travel time check process (S1707 to S1710). "there is free time" at the above step S1705 should mean that another inspection is not entered in the inspector allocation table and a plan other than an inspection is not entered in the inspector calendar.

In the travel time check process, the travel time calculating section 102 refers to the inspector master 151 and inspector calendar 152 of the inspector ($X_1$) and calculates time ($t_0$) of departure from the last place of stay for the inspector ($X_1$) and travel time ($t_1$) for travel from the last place of stay to the location of the property for the job included in the inspection request information (hereinafter briefly called the "property location") and calculates time of arrival at the property location (hereinafter called "property arrival time") $t_2$ in accordance with Equation (4) below (S1707).

$$t_2 = t_0 + t_1 \ldots (4)$$

where

$t_0$: departure time from the last place of stay
$t_1$: travel time from the last place of stay to the property location
$t_2$: property arrival time

Comparison is made between property arrival time ($t_2$) and the specified inspection start time included in the inspection request information and if property arrival time ($t_2$) is before the specified time (S1708/Yes), arrival time at the next place of stay ($t_4$) is calculated (S1709).

The arrival time at the next place of stay ($t_4$) is calculated by calculating travel time from the property location to the next place of stay ($t_3$) and adding working time $t_w$ and travel time from the property location to the next place of stay ($t_3$) to property arrival time $t_2$. Therefore, it is calculated from Equation (5) below.

$$t_4 = t_2 + t_w + t_3 \ldots (5)$$

where

$t_4$: arrival time at the next place of stay
$t_2$: property arrival time
$t_w$: working time
$t_3$: travel time from the property location to the next place of stay

If arrival time $t_4$ at the next place of stay is before time limit at the next place of stay (hereinafter called "next stay place time limit") (S1710/Yes), the provisional allocation processing section 105 provisionally allocates the inspection included in the inspection request information to the inspector ($X_1$) (S1711). If the next place of stay is the end point, the next stay place time limit is the finish time specified in the inspector master 151 and if the next place of stay is the location of the property for the next job, it is the task start time for the next job. This will be detailed later. Once provisional allocation has been made, detailed information on the provisionally allocated job is added to the inspector calendar 152 of the inspector ($X_1$) and the provisional allocation process is ended.

If the property arrival time is after the specified time (S1708/No) and if the arrival time at the next place of stay $t_4$ is after the next stay place time limit (S1710/No), and if the inspection request information contains specification of time (S1704/Yes) and there is no free time equivalent to the working time at the specified time (S1705/No), or if the inspection request information does not contain specification of time (S1704/No) and there is no free time equivalent to the working time at the specified time (S1706/No), the provisional allocation processing section 105 judges that the inspector ($X_1$) cannot conduct the inspection included in the inspection request information and proceeds to step S1712. If Group A still includes an inspector not judged yet as to availability for provisional allocation (S1712/No), the provisional allocation processing section 105 deletes the inspector ($X_1$) from Group A to update Group A (S1713), goes back to step S1702 where it extracts the next inspector ($X_2$) and repeats step S1703 and the subsequent steps.

If judgement has been made for all the inspectors of Group A (S1712/Yes), there are no inspectors to whom the inspection included in the inspection request information can be provisionally allocated and no provisional allocation is made and the process is ended.

In the above travel time check process, "the last place of stay" and "departure time from the last place of stay ($t_0$)" are the "departure point" and "start time" specified in the inspector master 151 if there is no schedule before the inspection included in the inspection request information, or if an inspection different from the inspection included in the inspection request information has already been provisionally allocated, they are the property location for the different job and the finish time for the other inspection. Also, "the next place of stay" and "time limit" are the "place of arrival" and "finish time" specified in the inspector master 151 if there is no schedule after the inspection included in the inspection request information, or if an inspection different from the inspection included in the inspection request information has already been provisionally allocated, they are the property location for the different inspection and the inspection start time for the different inspection.

For example, let's assume that no job is allocated to the inspector (X) as shown in the upper part of Fig. 18. In this case, the job in the inspection request information is the first job. The last place of stay for the first job is the departure point predetermined for each inspector in the inspector master 151. Thus the travel time calculating section 102 calculates travel time 1 from the departure point to the property location for the first job as $t_1$. Then, it calculates the property arrival time for the first job $t_2$ by adding $t_1$ to the predetermined departure time to in the inspector master 151. If there is no schedule after the first job, it calculates travel time 2 to the end point as $t_3$. Then, it calculates arrival time $t_4$ at the end point in accordance with the above Equation (5) and if this is before the finish time specified in the inspector master 151, provisional allocation is made.

If the first job has already been allocated as shown in the lower part of Fig. 18 and the job in the inspection request information is the second job, the property location for the first job is the last place of stay and the second job is the property location. In this case, it calculates travel time 3 from the property location for the first job to the property location for the second job as $t_1$. Also, if another job (third job) has already been allocated after the second job, it calculates travel time 4 from the property location for the second job to the property location for the third job as $t_3$. Then, it calculates arrival time for the third job $t_4$ in accordance with the above Equation (5) and if this is before the inspection start time for the third job, provisional allocation is made.

According to the above provisional allocation process, an inspector with lower versatility can be allocated preferentially by making provisional allocation among the inspectors with the skill to match the content of an inspection request in the order of priority (in the above example, in the ascending order of the number of skills). In addition, in judging whether or not to be able to respond to a request for an inspector, judgement is made taking into consideration working time based on the level of skill of each inspector and the travel time from each inspector's last place of stay before the inspection request concerned to the next place of stay, so it is easy to avoid a problem such as delayed arrival at the property location.

Jobs can be automatically allocated to inspectors who can respond to inspection requests, by the provisional allocation process. However, as already explained referring to Figs. 3 and 4, the route on which an inspector travels around for inspection work is not always optimized by the provisional allocation process. For this reason, a process to reallocate the provisionally allocated jobs to minimize the task time for each inspector, a so-called optimization process, is performed before the day when inspection is executed actually (day of inspection execution).

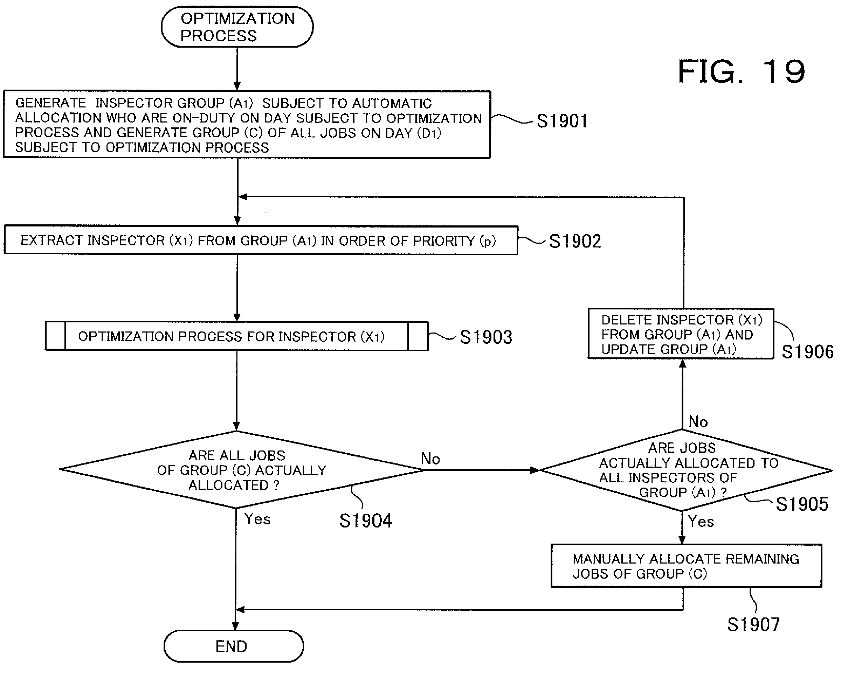

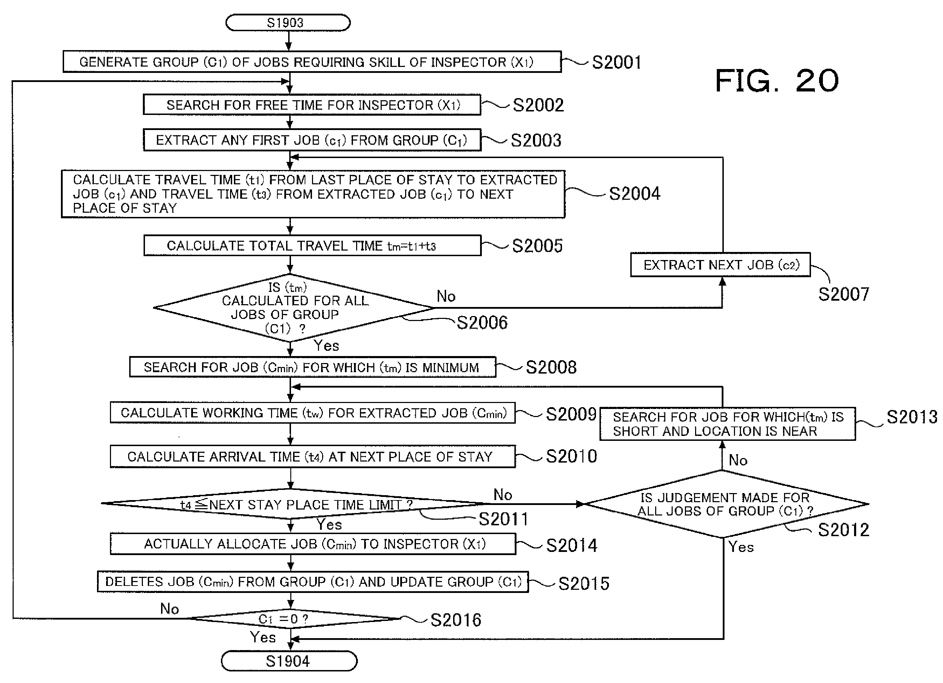

Next, the optimization process at step S812 in Fig. 8 will be described referring to Figs. 19 and 20. Fig. 19 is a flowchart showing the general sequence of the optimization process. Fig. 20 is a flowchart showing details of the optimization process for the inspector ($X_1$). Next, the general optimization process will be described in the order of the steps in Fig. 19, then details of the optimization process for the inspector ($X_1$) as part of the general optimization process will be described in detail referring to Fig. 20.

When the operator operates the OPTIMIZE button 154 (see Fig. 7) shown together with the inspector allocation table 153, the optimization section 106 refers to the inspector calendar 152 and generates Group $A_1$ of inspector(s) subject to automatic allocation who are on-duty on the day subject to the optimization process (May 7, 2013 in the example of Fig. 7). Also, it refers to the inspector allocation table 153 and generates Job Group C of all the jobs to be executed on the day subject to the optimization process (S1901). If a specific inspector is expected to be specified for a certain job, a flag should be manually entered in the Optimization Lock field of the inspector allocation table 153 before operation of the OPTIMIZE button 154.

Next, the optimization section 106 extracts an inspector ($X_1$) from Group $A_1$ in the order of priority (p) (S1902) and performs the optimization process for the inspector ($X_1$) (S1903). This will be described in detail later.

If Job Group C still includes jobs which are not subject to the optimization process (S1904/No) and Group $A_1$ also still includes inspectors who are not subject to the optimization process (S1905/No), it excludes the inspector ($X_1$) from Group $A_1$ to update Group $A_1$ (S1906) and goes back to step S1902 where it extracts the next inspector ($X_2$) and repeats step S1903 and the subsequent steps.

If Job Group C still includes jobs not subject to the optimization process (S1904/No) but the optimization process has been finished for all the inspectors of Group $A_1$ (S1905/Yes), the user manually allocates inspectors to the remaining jobs after deletion of actually allocated jobs from Job Group C (S1906). An inspector who is manually allocated here is an inspector for whom an automatic allocation flag is not set in the inspector master 151. In addition, it is possible to make manual allocation to break time of an automatically allocated inspector or time after task finish time (overtime). When the manual allocation process is ended and when actual allocation of all the jobs of Job Group C is finished (S1904/Yes), the optimization process is ended. For the convenience of explanation, the manual allocation process has been described above as part of the optimization process, but the optimization process means an allocation process by the schedule table creation device 10 and the manual allocation process by the operator corresponds to a process to correct the result of the optimization process. Therefore, the manual allocation process may not be included in the optimization process.

Next, the optimization process for the inspector ($X_1$) will be described in detail in the order of the steps in Fig. 20.

The optimization section 106 generates Job Group $C_1$ of jobs among Job Group C, which can be executed by the skill of the inspector ($X_1$) (S2001) and searches for free time for the inspector ($X_1$) on the day subject to the optimization process, referring to the inspector calendar 152 for the inspector ($X_1$) (S2002).

It extracts any one job from Job Group $C_1$, for example, job $C_1$ (S2003), calculates travel time $t_1$ from the last place of stay to the property location for the extracted job and calculates travel time $t_3$ from the property location for the extracted job to the next place of stay (S2004). Then it calculates total travel time $t_m$ as the sum of travel time $t_1$ to the property location for the extracted job and travel time $t_3$ to the next place of stay (S2005). Thus, total travel time $t_m$ is calculated from Equation (6).

$$\text{Total travel time } t_m = t_1 + t_3 \ldots (6)$$

The calculated total travel time $t_m$ is temporarily stored in correlation with the extracted job.

If Job Group $C_1$ still includes a job for which total travel time $t_m$ has not been calculated (S2006/No), the above extracted job $C_1$ is deleted from Job Group $C_1$ to update Job Group $C_1$ (S2007) and the process goes back to step S2003 where the next job $C_2$ is extracted.

When total travel time $t_m$ is calculated for all the jobs of Job Group $C_1$ (S2006/Yes), it determines job $C_{min}$ for which total travel time $t_m$ is the shortest (S2008). Before extracting job $C_{min}$ at step S2008, Job Group $C_1$ may be rearranged under the sorting conditions "descending order of total travel time $t_m$ and ascending order of address". Consequently, even if travel time is equal, a nearer place will be more likely to be selected so that a worker can travel around in the same area and loss in traveling between job locations is easily reduced. The working time calculating section 103 calculates working time $t_w$ required for the inspector ($X_1$) to execute job $C_{min}$ according to the working coefficient of the inspector ($X_1$) (S2009). Then the optimization section 106 calculates arrival time $t_4$ at the next place of stay from Equation (7) below (S2010).

$$t_4 = t_0 + t_m + t_w \quad ... \quad (7)$$

$t_0$: departure time from the last place of stay, $t_m$: total travel time ($t_m = t_1 + t_3$), $t_w$: working time required for the inspector ($X_1$) to execute job $C_1$. If arrival time $t_4$ at the next place of stay is after next stay place time limit (S2011/No), job $C_{min}$ cannot be actually allocated to the inspector ($X_1$). If Job Group $C_1$ still includes a job which has not been judged yet as to whether or not actual allocation is allowed (S2012/No), it extracts a job for which total travel time $t_m$ is short and whose address is near (S2013), then goes back to step S2009 and repeats the subsequent steps.

If arrival time $t_4$ at the next place of stay is before next stay place time limit (S2011/Yes), it actually allocates job $C_{min}$ to the inspector ($X_1$) (S2014), deletes job $C_{min}$ from Job Group $C_1$ to update Job Group $C_1$ (S2015). If Job Group $C_1$ still includes a job which has not been actually allocated (S2016/No), it goes back to step S2002 and searches the inspector calendar 152 for the inspector ($X_1$). Then it extracts the next job $C_2$ (S2003). Then, it takes the job $C_{min}$ allocated actually at step S2014 as the last place of stay and repeats step S2004 and the subsequent steps. If judgement as to whether or not actual allocation is allowed is finished for all the jobs of Job Group $C_1$(S2012/Yes) and if Job Group $C_1$ does not include any actually unallocated job (S2016/Yes), the process for the inspector ($X_1$) is ended.

According to the above optimization process, a job can be allocated to an inspector with a skill required to conduct an inspection so as to minimize the task time. As a consequence, the company to which the inspector belongs, as a whole, can shorten the task time, thereby contributing to task cost reduction. In addition, increased free time leads to more business contracts and increased sales.

The above embodiment has been explained by taking an example of the schedule table creation system for inspectors who inspect buildings, but tasks to which the present invention can be applied are not limited to the above. For example, the present invention may be applied to automatic job allocation and creation of a schedule table showing the result in the field of house harmful insect extermination, for workers with a termite extermination skill or workers with a hornet extermination skill. Also, in the solar panel installation business, workers who have the skill to calculate electricity generated, the skill to fix and install solar panels on a roof, and the skill of electric work to connect solar panels to home electric wires are required and automatic job allocation and creation of schedule tables relating to these tasks may be created.

**Reference Signs List**

1... Schedule table creation system,
10... Schedule table creation device,
11... CPU,
12... RAM,
13... Storage unit,
14... Network I/F,
15... Output/input I/F,
16... Bus,
17... Input unit,
18... Monitor,
19... Printer,
21... Mobile terminal,
30... Public network (network),
31... Base station,
40... Reservation terminal,
101... Reservation receiving section,
102... Travel time calculating section,
103... Working time calculating section,
104... Worker availability calendar creation section,
105... Provisional allocation processing section,
106... Optimization section,
107... Data storage section,
108... Report output section,

110... Control section,

**Claims**

1.  A task allocation device which allocates a task requiring a specific skill to execute a task to a worker with the skill, comprising a control section which performs:

    referring to a worker allocation table storing a task provisionally allocated to the worker, extracting all tasks scheduled to be executed on a specific workday and cancelling provisional allocation of all the tasks;
    referring to a worker master storing a skill of each of the workers and extracting a worker subject to task allocation, among the workers to be on-duty on the specific workday in a predetermined order of priority;
    extracting all tasks that are scheduled to be executed on the specific workday and can be executed with the skill of the worker subject to task allocation and calculating total travel time for each of all the tasks by adding travel time from a last place of stay where the worker stays before conducting each task to a place of execution of the task and travel time from the place of execution of the task to a next place of stay to which the worker travels from the place of execution of the task;
    extracting a task for which the total travel time is shortest, as a task subject to allocation;
    calculating working time which it takes for the worker to conduct the task subject to allocation;
    calculating next stay place arrival time as time of arrival at the next place of stay, on the basis of the working time and the total travel time; and
    performing a process to allocate the task subject to allocation to the worker if the next stay place arrival time is before time limit for the next place of stay indicating the latest time at which the worker should arrive at the next place of stay.

2.  The task allocation device according to Claim 1, further comprising a report output section which creates a report based on a task allocated to the worker by the control section and outputs the report.

3.  The task allocation device according to Claim 2, wherein the report output section creates a map report in which a route for traveling around places for tasks allocated to the worker is superimposed on map information.

4.  The task allocation device according to Claim 2 or 3, wherein the report output section creates a time chart indicating task time details along an order of travelling for the tasks allocated to the worker on the specific workday.

5.  The task allocation device according to any one of Claims 1 to 4, wherein the control section:

    receives a request for execution of the task and a desired date of execution of the task;
    calculates standard working time for the requested task; and
    judges, based on the standard working time, whether or not the requested task can be executed on each of workdays within a given period from the desired date of execution, for all workers with a skill required to execute the requested task, and creates a worker availability calendar showing a result thereof.

6.  The task allocation device according to any one of Claims 1 to 5, wherein the control section:

    receives a request for execution of the task and a desired date of execution of the task;
    extracts a worker among all workers with a skill required to execute the requested task, in a predetermined order of priority;
    calculates working time required for the worker to execute the requested task;
    calculates the next stay place arrival time using the working time;
    provisionally allocates the requested task to the worker if the next stay place arrival time is before the time limit for the next place of stay, and accepts the request for execution of the task; and
    cancels the provisional task allocation when allocating the task subject to allocation and performs a process to allocate the task subject to allocation, taking travel time into account.

7.  A task allocation program which makes a computer allocate a task requiring a specific skill to execute a task to a worker with the skill, making the computer perform:

    referring to a worker allocation table storing a task provisionally allocated to the worker, extracting all tasks

17

scheduled to be executed on a specific workday and cancelling provisional allocation of all the tasks;
referring to a worker master storing a skill of each of the workers and extracting a worker subject to task allocation, among the workers to be on-duty on the specific workday in a predetermined order of priority;
extracting all tasks that are scheduled to be executed on the specific workday and can be executed with the skill of the worker subject to task allocation and calculating total travel time for each of all the tasks by adding travel time from a last place of stay where the worker stays before conducting each task to a place of execution of the task and travel time from the place of execution of the task to a next place of stay to which the worker travels from the place of execution of the task;
extracting a task for which the total travel time is shortest, as a task subject to allocation;
calculating working time which it takes for the worker to conduct the task subject to allocation;
calculating next stay place arrival time as time of arrival at the next place of stay, on the basis of the working time and the total travel time; and
performing a process to allocate the task subject to allocation to the worker if the next stay place arrival time is before time limit for the next place of stay indicating the latest time at which the worker should arrive at the next place of stay.

8.  The task allocation program according to Claim 7, further making the computer:

receive a request for execution of the task and a desired date of execution of the task;
extract a worker among all workers with a skill required to execute the requested task, in a predetermined order of priority;
calculate working time required for the worker to execute the requested task;
calculate the next stay place arrival time using the working time;
provisionally allocate the requested task to the worker if the next stay place arrival time is before the time limit for the next place of stay and accept the request for execution of the task; and
cancel the provisional task allocation when allocating the task subject to allocation and perform a process to allocate the task subject to allocation.


**Amended claims under Art. 19.1 PCT**

1. (amended) A task allocation device which allocates a task requiring a specific skill to execute a task to a worker with the skill, comprising
a control section which performs:

referring to a worker allocation table storing a task provisionally allocated to the worker, extracting all tasks scheduled to be executed on a specific workday and cancelling provisional allocation of all the tasks;
referring to a worker master storing a skill of each of the workers and extracting a worker subject to task allocation, among the workers to be on-duty on the specific workday in an order of priority with higher priority placed on a worker with a smaller number of skills;
extracting all tasks that are scheduled to be executed on the specific workday and can be executed with the skill of the worker subject to task allocation and calculating total travel time for each of all the tasks by adding travel time from a last place of stay where the worker stays before conducting each task to a place of execution of the task and travel time from the place of execution of the task to a next place of stay to which the worker travels from the place of the execution of the task;
extracting a task for which the total travel time is shortest, as a task subject to allocation;
calculating working time which it takes for the worker to conduct the task subject to allocation, using a working coefficient based on at least either of a skill level of the worker for each inspection and existence or non-existence of a person accompanying the worker;
calculating next stay place arrival time as time of arrival at the next place of stay, on the basis of the working time and the total travel time; and
performing a process to allocate the task subject to allocation to the worker if the next stay place arrival time is before limit time for the next place of stay indicating the latest time at which the worker should arrive at the next place of stay; and

a report output section which creates a report based on a task allocated to each worker by the control section and outputs the report.

**2.** (amended) The task allocation device according to Claim 1, wherein after allocation of a task on the specific workday to a worker with a first skill and a second skill as the plurality of skills is finished, one is subtracted respectively from the number of workers with the first skill and from the number of workers with the second skill who are subject to the task allocation for the specific workday.

**3.** (amended) The task allocation device according to Claim 1, wherein the control section:

calculates task time for a worker subject to the task allocation for the specific workday by adding total travel time, total working time, and break time for the worker, the break time including mandatory break time to be mandatorily taken and optional break time to be optionally taken, and
if time when the worker arrives at an end point is later than a predetermined task finish time, shortens the optional break time so that the worker arrives at the end point before the finish time.

**4.** (amended) The task allocation device according to Claim 2, wherein the report output section creates a map report in which a route for traveling around places for tasks allocated to the worker is superimposed on map information.

**5.** (amended) The task allocation device according to Claim 2 or 3, wherein the report output section creates a time chart indicating task time details along an order of travelling for the tasks allocated to the worker on the specific workday.

**6.** (amended) The task allocation device according to any one of Claims 1 to 5, wherein the control section:

receives a request for execution of the task and a desired date of execution of the task;
calculates standard working time for the requested task; and
judges, based on the standard working time, whether or not the requested task can be executed on each of workdays within a given period from the desired date of execution, for all workers with a skill required to execute the requested task, and creates a worker availability calendar showing a result thereof.

**7.** (amended) The task allocation device according to any one of Claims 1 to 6, wherein the control section:

receives a request for execution of the task, a desired date of execution of the task, and designation of a worker to execute the task and gives optimization lock information to prohibit cancellation of the provisional task allocation;
calculates working time required for the worker to execute the requested task;
calculates the next stay place arrival time using the working time;
provisionally allocates the requested task to the worker if the arrival time at the next place of stay is before the limit time for the next place of stay and accepts the request for execution of the task; and
cancels provisional allocation of only a provisional task not given the optimization lock information when allocating the task to be allocated and performs a process to allocate the task to be allocated, taking travel time into account.

**8.** (amended) A task allocation program which makes a computer allocate a task requiring a specific skill to execute a task to a worker with the skill, making the computer perform:

referring to a worker allocation table storing a task provisionally allocated to the worker, extracting all tasks scheduled to be executed on a specific workday and cancelling provisional allocation of all the tasks;
referring to a worker master storing a skill of each of the workers and extracting a worker subject to task allocation, among the workers to be on-duty on the specific workday in an order of priority with higher priority placed on a worker with a smaller number of skills;
extracting all tasks that are scheduled to be executed on the specific workday and can be executed with the skill of the worker subject to task allocation and calculating total travel time for each of all the tasks by adding travel time from a last place of stay where the worker stays before conducting each task to a place of execution of the task and travel time from the place of execution of the task to a next place of stay to which the worker travels from the place for the job;
extracting a task for which the total travel time is shortest, as a task subject to allocation;
calculating working time which it takes for the worker to conduct the task subject to allocation, using a working coefficient set based on at least either of a skill level of the worker for each inspection and existence or non-existence of a person accompanying the worker;

calculating next stay place arrival time as time of arrival at the next place of stay, on the basis of the working time and the total travel time; and

performing a process to allocate the task subject to allocation to the worker if the next stay place arrival time is before predetermined limit time for the next place of stay indicating the latest time at which the worker should arrive at the next place of stay.

**9.** (amended) The task allocation program according to Claim 7, further making the computer:

receive a request for execution of the task, a desired date of execution of the task and designation of a worker to execute the task, and give optimization lock information to prohibit cancellation of the provisional task allocation;

extract a worker among all workers with a skill required to execute the requested task, in the order of priority;

calculate working time required for the worker to execute the requested task;

calculate the next stay place arrival time using the working time;

provisionally allocate the requested task to the worker if the next stay place arrival time is before the limit time for the next place of stay and accept the request for execution of the task; and

cancel provisional allocation of only a provisional task not given the optimization lock information when allocating the task to be allocated and perform a process to allocate the task to be allocated, taking travel time into account.

Statement under Article 19(1) PCT

**Statement under Art. 19.1 PCT**

Claim 1 is an amended version of original Claim 1, in which an amendment is made based on [0095] and [0055] to [0059].

Claim 2 is an amended version of original Claim 1, in which an amendment is made based on [0113] and step S1906 in Fig. 19.

Claim 3 is an amended version of original Claim 1, in which an amendment is made based on [0046] to [0048].

Claims 4, 5, and 6 are amended versions of original Claims 3, 4, and 5 respectively, in which only claim numbers are amended.

Claim 7 is an amended version of original Claim 6, in which an amendment is made based on [0065].

Claim 8 is an amended version of original Claim 7, in which an amendment is made based on [0095] and [0055] to [0059].

Claim 9 is newly added as an amended version of original Claim 8, in which an amendment is made based on [0065].

These amendments have been made in order to clarify that the present invention is **characterized by** task allocation in a situation where there are tasks requiring a plurality of skills and a single worker has a plurality of skills.

In this respect, the search report denies an inventive step, saying that "Literature 1 (JP-2013-137617) adopts observation of appointed time as an object function"; however, the present invention takes observation of appointed time (time of arrival at the site) for granted and has an object to minimize travel time for each worker and thereby minimize travel time for all the workers of a company to optimize task allocation in the company as a whole. Thus, the concept of minimization of travel time is not disclosed and any description which suggests or motivates it is not found in Literature 1 and Literature 2 (JP-2004-178304) and Literature 3 (JP-2003-141249). Therefore, it cannot be said that a person skilled in the art could easily have thought of the present invention on the basis of Literature 1 to Literature 3.

# FIG. 1

EP 3 032 475 A1

# FIG. 2

RESERVATION TERMINAL — 40

110

101 RESERVATION RECEIVING SECTION

102 TRAVEL TIME CALCULATING SECTION

103 WORKING TIME CALCULATING SECTION

104 WORKER AVAILABILITY CALENDAR CREATION SECTION

105 PROVISIONAL ALLOCATION PROCESSING SECTION

106 OPTIMIZATION SECTION

107 DATA STORAGE SECTION

108 REPORT OUTPUT SECTION

10

18 MONITOR

19 PRINTER

21 MOBILE TERMINAL

EP 3 032 475 A1

# FIG. 3

(a)

(b)

# FIG. 4

|   | 8 | 9 | 10 | 11 | 12 | 13 | 14 | 15 | 16 | 17 | 18 |
|---|---|---|----|----|----|----|----|----|----|----|----|
| A | TRAVEL | JOB 1 | TRAVEL | BREAK | JOB 2 | TRAVEL | JOB 3 | | TRAVEL | END POINT | |
| B | TRAVEL | JOB 4 | TRAVEL | JOB 5 | BREAK | JOB 5 | TRAVEL | JOB 6 | | TRAVEL | END POINT |

(a)

|   | 8 | 9 | 10 | 11 | 12 | 13 | 14 | 15 | 16 | 17 | 18 |
|---|---|---|----|----|----|----|----|----|----|----|----|
| A | TRAVEL | JOB 4 | TRAVEL | JOB 3 | BREAK | TRAVEL | JOB 2 | | TRAVEL | END POINT | |
| B | TRAVEL | JOB 1 | TRAVEL | JOB 5 | BREAK | TRAVEL | JOB 6 | | TRAVEL | END POINT | |

(b)

EP 3 032 475 A1

# FIG. 5

| INSPECTOR NAME | DEPARTURE POINT | END POINT | AUTOMATIC ALLOCATION | SKILL a | SKILL b | SKILL c | WORKING COEFFICIENT | DEPARTURE TIME | FINISH TIME |
|---|---|---|---|---|---|---|---|---|---|
| A | OFFICE | OFFICE | ◯ | ◯ | | | 1.5 | 8:00 | 18:00 |
| B | HOME | HOME | ◯ | ◯ | ◯ | | 1.0 | 8:00 | 18:00 |
| C | OFFICE | OFFICE | ◯ | | ◯ | | 0.75 | 8:00 | 18:00 |
| D | OFFICE | OFFICE | | ◯ | ◯ | | 0.7 | 8:00 | 18:00 |
| E | OFFICE | OFFICE | | | | ASSISTANT (D) | 0 | 8:00 | 18:00 |

~151

# FIG. 6

| 2013 | INSPECTOR A | 9 | 10 | 11 | 12 | 13 | 14 | 15 | 16 | 17 | 18 |
|---|---|---|---|---|---|---|---|---|---|---|---|
| MAY 1 | WED. | | JOB_xxx | | | JOB_xxx | | | JOB_xxx | | |
| MAY 2 | THUR. | | | JOB_xxx | | | JOB_xxx | | | | |
| MAY 3 | FRI. | | JOB_xxx | | | JOB_xxx | | | JOB_xxx | | |
| MAY 4 | SAT. | | | | | | | | | | |
| MAY 5 | SUN. | | | | | | | | | | |
| MAY 6 | MON. | | | | | | PROVISIONAL ALLOCATION | | | | |
| MAY 7 | TUE. | | | | | | | | | | |
| MAY 8 | WED. | | PROVISIONAL ALLOCATION | | | | | | | | |
| MAY 9 | THUR. | | | | | | | | | | |
| MAY 10 | FRI. | | TRAINING | | | | | | | | |
| MAY 11 | SAT. | | | | | | | | | | |
| MAY 12 | SUN. | | | | HOLIDAY | | | | | | |
| MAY 13 | MON. | | | | | | | | | | |
| MAY 14 | TUE. | | | | | | | | | | |
| MAY 15 | WED. | | | | | | | | | | |
| MAY 16 | THUR. | | | | | | | | | | |
| MAY 17 | FRI. | | | | | | | | | | |
| MAY 18 | SAT. | | | | | | | | | | |
| MAY 19 | SUN. | | | | | | | | | | |
| MAY 20 | MON. | | | | | | | | | | |
| MAY 21 | TUE. | | | | | | | | | | |
| MAY 22 | WED. | | | | | | | | | | |
| MAY 23 | THUR. | | | | | | | | | | |
| MAY 24 | FRI. | | | | | | | | | | |
| MAY 25 | SAT. | | | | | | | | | | |
| MAY 26 | SUN. | | | | | | | | | | |
| MAY 27 | MON. | | | | | | | | | | |
| MAY 28 | TUE. | | | | | | | | | | |
| MAY 29 | WED. | | | | | | | | | | |
| MAY 30 | THUR. | | | | | | | | | | |
| MAY 31 | FRI. | | | | | | | | | | |

~152

# FIG. 7

MAY 7, 2013 (FRI.)

| INSPECTOR NAME | START TIME | JOB NO. | OPTIMIZATION LOCK | PROPERTY LOCATION | INSPECTION TYPE | STRUCTURE TYPE | USE | TOTAL FLOOR AREA |
|---|---|---|---|---|---|---|---|---|
| A | 9:00 | JOB 1 | | MINATO WARD ⋯ | a | RC | CONDOMINIUM | ⋯ |
| | 12:30 | JOB 2 | | TOSHIMA WARD ⋯ | a | RC | CONDOMINIUM | ⋯ |
| | 15:00 | JOB 3 | | NERIMA WARD ⋯ | a | WOODEN | DETACHED HOUSE | ⋯ |
| B | 9:00 | JOB 4 | | NAKANO WARD ⋯ | a | RC | CONDOMINIUM | ⋯ |
| | 12:00 | JOB 5 | LOCK | KOTO WARD ⋯ | a,b | SRC | SHOP | ⋯ |
| | 15:00 | JOB 6 | | SUMIDA WARD ⋯ | d | RC | DORMITORY | ⋯ |

153

OPTIMIZE ~154

# FIG. 8

```
RESERVATION            SCHEDULE TABLE            MOBILE
TERMINAL 40            CREATION DEVICE 10        TERMINAL 217
```

S801
PREPARATIONS

ACCESS INSPECTION COMPANY'S WEBSITE (S802)

ACQUIRE LOG-IN SCREEN (S803)

TRANSMIT LOG-IN INFORMATION (S804)

AUTHENTICATION  S805

TRANSMIT INSPECTION RESERVATION SCREEN (S806)

TRANSMIT INSPECTION REQUEST INFORMATION (S807)

WORKER AVAILABILITY CALENDAR CREATION PROCESS  S808

TRANSMIT WORKER AVAILABILITY CALENDAR (S809)

TRANSMIT DESIRED DATE (S810)

PROVISIONAL ALLOCATION PROCESS  S811

S812
OPTIMIZATION PROCESS

TRANSMIT SCHEDULE TABLE SCREEN (S813)

REPORT OUTPUT PROCESS  S814

# FIG. 9

INSPECTION COMPANY X

160

USER ID  [ ] 161

LOG-IN PASSWORD  [ ] 162

LOG-IN  163

NEW CUSTOMER REGISTRATION

164

EP 3 032 475 A1

# FIG. 10

| PROPERTY NAME | | 171 |
| PROPERTY LOCATION | | 172 | 170
| INSPECTION TYPE | ☐ INSPECTION A   ☐ INSPECTION B   ☐ INSPECTION C   ☐ INSPECTION D | 173 |
| BUILDING STRUCTURE | | 174 |
| USE OF BUILDING | | 175 |
| TOTAL FLOOR AREA | | 176 |
| DESIRED TIME | 9:00~11:00 ▼ | 177 |

REQUEST FOR
SLENDER WORKER   ☑ 178

TRANSMIT 179

# FIG. 11

181

| INSPECTION A 2013 MAY & JUNE | 9:00~11:00 | | | | | | | | | | | | |
|---|---|---|---|---|---|---|---|---|---|---|---|---|---|
| SUN. | MON. | TUE. | WED. | THUR. | FRI. | SAT. | SUN. | MON. | TUE. | WED. | THUR. | FRI. | SAT. |
| | | | 1 | 2 | 3 | 4 | 2 | 3 | 4 | 5 | 6 | 7 | 8 |
| | | | CLOSED | CLOSED | CLOSED | × | 2 | 5 | 5 | 5 | 5 | 5 | 5 |
| 5 | 6 | 7 | 8 | 9 | 10 | 11 | 9 | 10 | 11 | 12 | 13 | 14 | 15 |
| × | △ | △ | 1 | 1 | △ | × | 3 | 5 | 5 | 5 | 5 | 5 | 5 |
| 12 | 13 | 14 | 15 | 16 | 17 | 18 | 16 | 17 | 18 | 19 | 20 | 21 | 22 |
| × | 1 | 2 | 3 | 3 | 4 | × | 3 | 5 | 5 | 5 | 5 | 5 | 5 |
| 19 | 20 | 21 | 22 | 23 | 24 | 25 | 23 | 24 | 25 | 26 | 27 | 28 | 29 |
| × | 5 | 5 | 5 | 5 | 5 | 5 | 3 | 5 | 5 | 5 | 5 | 5 | 5 |
| 26 | 27 | 28 | 29 | 30 | 31 | 1 | 30 | | | | | | |
| 2 | 5 | 5 | 5 | 5 | 5 | 5 | 3 | | | | | | |

~180a

(a)

181

| INSPECTION A 2013 MAY & JUNE | NOT SPECIFIED | | | | | | | | | | | | |
|---|---|---|---|---|---|---|---|---|---|---|---|---|---|
| SUN. | MON. | TUE. | WED. | THUR. | FRI. | SAT. | SUN. | MON. | TUE. | WED. | THUR. | FRI. | SAT. |
| | | | 1 | 2 | 3 | 4 | 2 | 3 | 4 | 5 | 6 | 7 | 8 |
| | | | CLOSED | CLOSED | CLOSED | × | 2 | 5 | 5 | 5 | 5 | 5 | 5 |
| 5 | 6 | 7 | 8 | 9 | 10 | 11 | 9 | 10 | 11 | 12 | 13 | 14 | 15 |
| × | △ | 2 | 2 | 1 | 1 | × | 3 | 5 | 5 | 5 | 5 | 5 | 5 |
| 12 | 13 | 14 | 15 | 16 | 17 | 18 | 16 | 17 | 18 | 19 | 20 | 21 | 22 |
| × | 3 | 4 | 4 | 5 | 4 | × | 3 | 5 | 5 | 5 | 5 | 5 | 5 |
| 19 | 20 | 21 | 22 | 23 | 24 | 25 | 23 | 24 | 25 | 26 | 27 | 28 | 29 |
| × | 5 | 5 | 5 | 5 | 5 | 5 | 3 | 5 | 5 | 5 | 5 | 5 | 5 |
| 26 | 27 | 28 | 29 | 30 | 31 | 1 | 30 | | | | | | |
| 2 | 5 | 5 | 5 | 5 | 5 | 5 | 3 | | | | | | |

~180b

(b)

# FIG. 12

| MM/DD | TODAY'S SCHEDULE (INSPECTOR B) | ~191 |

DEPART AT 8:00 OFFICE ——192

8 : 10 ___ STATION | INSPECTION A
CUSTOMER a

9 : 40 ___ STATION | INSPECTION B
CUSTOMER b

13:05 ___ STATION | INSPECTION A,B
CUSTOMER c

15:30 ___ STATION | RETURN TO THE OFFICE

193

190

# FIG. 13

(a)

(b)

## FIG. 14

| | DEPARTURE | ARRIVAL | 8 | | 9 | | 10 | | 11 | | 12 | | 13 | | 14 | | 15 | | 16 | | 17 | | 18 | |
|---|---|---|---|---|---|---|---|---|---|---|---|---|---|---|---|---|---|---|---|---|---|---|---|---|
| A | 8:00 | 16:00 | M | | 4 | | M | | 3 | | BREAK TIME | | M | | | 2 | | | M | | | E | | |
| B | 8:00 | 16:00 | M | | 1 | | M | | 5 | | | BREAK TIME | | M | | | 6 | | | M | | | E | | |

(a)

210

| | DEPARTURE | ARRIVAL | 8 | | 9 | | 10 | | 11 | | 12 | | 13 | | 14 | | 15 | | 16 | | 17 | | 17 | |
|---|---|---|---|---|---|---|---|---|---|---|---|---|---|---|---|---|---|---|---|---|---|---|---|---|
| A | 8:00 | 18:00 | M | | 4 | | M | | 3 | | BREAK TIME | | M | | | 2 | | | M | | 7 | M | E | |
| B | 8:00 | 16:00 | M | | 1 | | M | | 5 | | | BREAK TIME | | M | | | 6 | | | M | | | E | | |

(b)

213

**FIG. 15**

```
                    ┌──────────┐
                    │   S808   │
                    └────┬─────┘
                         ▼
        ┌─────────────────────────────────────┐
        │ CALCULATE STANDARD WORKING TIME ON THE │──── S1501
        │ BASIS OF INSPECTION REQUEST INFORMATION│
        └─────────────────┬───────────────────┘
                          ▼
   ┌──────────────────────────────────────────────┐
   │ GENERATE GROUP A OF INSPECTOR WHO HAVE REQUIRED SKILL │──── S1502
   │ AND ARE SUBJECT TO AUTOMATIC ALLOCATION AND NOT OFF  │
   │ DUTY ON DATE OF INSPECTION                           │
   └─────────────────┬────────────────────────────┘
                     ▼
     ┌──────────────────────────────────────────┐
     │ SET WORKDAY (D1) WITHIN PRESET PERIOD WHICH IS │──── S1503
     │ SUBJECT TO WORKER AVAILABILITY CALCULATION    │
     └─────────────────┬────────────────────────┘
                       ▼
     ┌──────────────────────────────────────────┐
     │ EXTRACT AN ARBITRARY INSPECTOR (X1) FROM GROUP A │──── S1504
     └─────────────────┬────────────────────────┘
                       ▼
              TIME SPECIFIED ?  ──Yes──►  IS INSPECTOR UNAVAILABLE AT THE TIME ? ──Yes──┐
                   S1505                            S1506                               │
                    │No                              │No                                │
                    ▼                                ▼                                  │
          IS THERE FREE TIME EQUIVALENT    ┌─────────────────────────┐                 │
          TO WORKING TIME ? ──Yes────────► │ NUMBER OF REMAINING     │                 │
                   S1507                    │ INSPECTORS  N ← N+1     │── S1508         │
                    │No ◄───────────────────└─────────────────────────┘                 │
                    ▼                                                                   │
          IS AVAILABILITY OF ALL INSPECTORS ──No──► ┌──────────────────────────────┐   │
          OF GROUP A CHECKED ?                       │ DELETE INSPECTOR (X1) FROM GROUP │◄─┘
                   S1509                             │ A AND UPDATE GROUP A          │
                    │Yes                             └──────────────────────────────┘
                    ▼                                        S1510
                  ( A )
```

EP 3 032 475 A1

(A)

# FIG. 16

S1601 — N=0 ?
- No
- Yes

S1603 — GENERATE INSPECTOR GROUP B WHO HAVE REQUIRED SKILL AND ARE SUBJECT TO MANUAL ALLOCATION

S1610 — DELETE INSPECTOR (Y1) FROM GROUP B AND UPDATE GROUP B

S1604 — EXTRACT INSPECTOR (Y1) FROM GROUP B

S1605 — TIME SPECIFIED ?
- Yes
- No

S1606 — IS THERE FREE TIME EQUIVALENT TO WORKING TIME AT SPECIFIED TIME ?
- No
- Yes

S1607 — IS THERE FREE TIME EQUIVALENT TO WORKING TIME ?
- No
- Yes

S1609 — IS AVAILABILITY OF ALL INSPECTORS OF GROUP B CHECKED ?
- Yes
- No

S1602 — N FOR (D1)

S1608 — △ FOR (D1)

S1611 — x FOR (D1)

S1612 — IS AVAILABILITY CHECKED FOR ALL DAYS IN PRESET PERIOD ?
- No
- Yes

S1613 — CREATE AND DISPLAY WORKER AVAILABILITY CALENDAR

END

TO S1503

# FIG. 17

PROVISIONAL ALLOCATION PROCESS

GENERATE INSPECTOR GROUP A WHO HAVE SKILL TO CONDUCT INSPECTION INCLUDED IN INSPECTION REQUEST INFORMATION AND ARE SUBJECT TO AUTOMATIC ALLOCATION AND NOT OFF DUTY ON DATE OF INSPECTION — S1701

EXTRACT INSPECTOR $(X_1)$ FROM GROUP A IN ORDER OF PRIORITY $(p)$ — S1702

CALCULATE WORKING TIME $(t_w)$ FOR INSPECTION IN INSPECTION REQUEST INFORMATION BY INSPECTOR $(X_1)$ — S1703

TIME SPECIFIED ? — S1704
Yes / No

IS THERE FREE TIME EQUIVALENT TO WORKING TIME $t_w$ AT SPECIFIED TIME ? — S1705
No / Yes

IS THERE FREE TIME EQUIVALENT TO WORKING TIME ? — S1706
Yes / No

CALCULATE PROPERTY ARRIVAL TIME $(t_2)$ — S1707

$t_2 \leqq$ INSPECTION START TIME ? — S1708
No / Yes

CALCULATE ARRIVAL TIME AT NEXT PLACE OF STAY $(t_4)$ — S1709

$t_4 \leqq$ NEXT STAY PLACE TIME LIMIT ? — S1710
No / Yes

PROVISIONAL ALLOCATION TO INSPECTOR $(X_1)$ — S1711

DELETE INSPECTOR $(X_1)$ FROM GROUP A AND UPDATE GROUP A — S1713

IS AVAILABILITY OF ALL INSPECTORS OF GROUP A CHECKED ? — S1712
No / Yes

END

# FIG. 18

EP 3 032 475 A1

## FIG. 19

```
        ┌─────────────────────┐
        │    OPTIMIZATION     │
        │      PROCESS        │
        └─────────────────────┘
                  │
                  ▼
┌──────────────────────────────────────────────┐
│ GENERATE  INSPECTOR GROUP (A1)  SUBJECT TO    │
│ AUTOMATIC ALLOCATION WHO ARE ON-DUTY ON DAY   │── S1901
│ SUBJECT TO OPTIMIZATION PROCESS AND GENERATE  │
│ GROUP (C) OF ALL JOBS ON DAY (D1) SUBJECT TO  │
│ OPTIMIZATION PROCESS                          │
└──────────────────────────────────────────────┘
                  │
                  ▼
┌──────────────────────────────────────────────┐
│ EXTRACT INSPECTOR (X1) FROM GROUP (A1) IN     │── S1902
│ ORDER OF PRIORITY (p)                         │
└──────────────────────────────────────────────┘
                  │
                  ▼
┌──────────────────────────────────────────────┐
│   OPTIMIZATION PROCESS FOR INSPECTOR (X1)     │── S1903
└──────────────────────────────────────────────┘
```

GENERATE  INSPECTOR GROUP (A1)  SUBJECT TO AUTOMATIC ALLOCATION WHO ARE ON-DUTY ON DAY SUBJECT TO OPTIMIZATION PROCESS AND GENERATE GROUP (C) OF ALL JOBS ON DAY (D1) SUBJECT TO OPTIMIZATION PROCESS — S1901

EXTRACT INSPECTOR (X1) FROM GROUP (A1) IN ORDER OF PRIORITY (p) — S1902

OPTIMIZATION PROCESS FOR INSPECTOR (X1) — S1903

DELETE INSPECTOR (X1) FROM GROUP (A1) AND UPDATE GROUP (A1) — S1906

ARE ALL JOBS OF GROUP (C) ACTUALLY ALLOCATED ?  — S1904 — No →

ARE JOBS ACTUALLY ALLOCATED TO ALL INSPECTORS OF GROUP (A1) ? — S1905

No

Yes

Yes

MANUALLY ALLOCATE REMAINING JOBS OF GROUP (C) — S1907

END

EP 3 032 475 A1

## FIG. 20

```
                    ( S1903 )
                        │
                        ▼
┌──────────────────────────────────────────────────────────┐
│ GENERATE GROUP (C1) OF JOBS REQUIRING SKILL OF INSPECTOR (X1) ├─ S2001
└──────────────────────────────────────────────────────────┘
                        │
                        ▼
        ┌──────────────────────────────────────┐
        │ SEARCH FOR FREE TIME FOR INSPECTOR (X1) ├─ S2002
        └──────────────────────────────────────┘
                        │
                        ▼
        ┌──────────────────────────────────────┐
        │ EXTRACT ANY FIRST JOB (c1) FROM GROUP (C1) ├─ S2003
        └──────────────────────────────────────┘
                        │
                        ▼
┌──────────────────────────────────────────────────────────┐
│ CALCULATE TRAVEL TIME (t1) FROM LAST PLACE OF STAY TO EXTRACTED │
│ JOB (c1) AND TRAVEL TIME (t3) FROM EXTRACTED JOB (c1) TO NEXT   ├─ S2004
│ PLACE OF STAY                                                  │
└──────────────────────────────────────────────────────────┘
                        │
                        ▼
        ┌──────────────────────────────────────┐
        │ CALCULATE TOTAL TRAVEL TIME $t_m = t_1 + t_3$ ├─ S2005
        └──────────────────────────────────────┘
                        │
                        ▼                            ┌────────────────────┐
              IS ($t_m$)                             │ EXTRACT NEXT JOB (c2) ├─ S2007
          CALCULATED FOR ALL    ── No ──────────────▶└────────────────────┘
            JOBS OF GROUP                                      ▲
              (C1) ? ─ S2006                                   │
                        │ Yes                                  │
                        ▼
        ┌──────────────────────────────────────┐
        │ SEARCH FOR JOB ($C_{min}$) FOR WHICH ($t_m$) IS MINIMUM ├─ S2008
        └──────────────────────────────────────┘
                        │                    ┌──────────────────────────────┐
                        ▼                    │ SEARCH FOR JOB FOR WHICH($t_m$) IS │ ─ S2013
        ┌──────────────────────────────────────┐  │ SHORT AND LOCATION IS NEAR     │
        │ CALCULATE WORKING TIME ($t_w$) FOR EXTRACTED JOB ($C_{min}$) ├─ S2009 └──────────────┘
        └──────────────────────────────────────┘              ▲
                        │                                      │ No
                        ▼
        ┌──────────────────────────────────────┐
        │ CALCULATE ARRIVAL TIME ($t_4$) AT NEXT PLACE OF STAY ├─ S2010
        └──────────────────────────────────────┘
                        │
                        ▼                                 IS JUDGEMENT MADE FOR
          $t_4 \leq$ NEXT STAY PLACE TIME LIMIT ? ── No ──▶ ALL JOBS OF GROUP (C1) ?
                        │ Yes ─ S2011                            ─ S2012
                        ▼                                       │ Yes
        ┌──────────────────────────────────────┐
        │ ACTUALLY ALLOCATE JOB ($C_{min}$) TO INSPECTOR (X1) ├─ S2014
        └──────────────────────────────────────┘
                        │
                        ▼
        ┌──────────────────────────────────────┐
        │ DELETES JOB ($C_{min}$) FROM GROUP (C1) AND UPDATE GROUP (C1) ├─ S2015
        └──────────────────────────────────────┘
                        │
      No ──────────────▼
              $C_1 = 0$ ? ─ S2016
                        │ Yes
                        ▼
                    ( S1904 )
```

## INTERNATIONAL SEARCH REPORT

| | International application No. |
|---|---|
| | PCT/JP2014/068816 |

**A. CLASSIFICATION OF SUBJECT MATTER**
*G06Q10/10(2012.01)i*

According to International Patent Classification (IPC) or to both national classification and IPC

**B. FIELDS SEARCHED**

Minimum documentation searched (classification system followed by classification symbols)
G06Q10/10

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-137617 A  (Tokyo Gas Co., Ltd.),<br>11 July 2013 (11.07.2013),<br>paragraphs [0031] to [0066]<br>(Family: none) | 1-4,7<br>5,6,8 |
| Y | JP 2004-178304 A  (Tsubasa System Co., Ltd.),<br>24 June 2004 (24.06.2004),<br>paragraph [0041]<br>(Family: none) | 5,6,8 |
| Y | JP 2003-141249 A  (Geo Japan Kabushiki Kaisha),<br>16 May 2003 (16.05.2003),<br>paragraphs [0025] to [0026]<br>(Family: none) | 5,6,8 |

[×] Further documents are listed in the continuation of Box C.   [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    02 September, 2014 (02.09.14) | Date of mailing of the international search report<br>    16 September, 2014 (16.09.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/068816

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-025509 A  (Fujitsu Ltd.), 04 February 2013 (04.02.2013), entire text; all drawings & US 2013/0024227 A1 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008033433 A